# EUROPEAN PATENT APPLICATION

(11) **EP 2 246 687 A2**
(43) Date of publication of application: **03.11.2010**
(21) Application number: 10161637.3
(22) Date of filing: 30.04.2010
(51) Int. Cl.: G01N 1/06

(54) **Thin-section slides manufacturing apparatus and method for manufacturing thin-section slides**

(30) Priority: 01.05.2009 JP 2009112284
(71) Applicant: Seiko Instruments Inc., Chiba-shi, Chiba (JP)
(72) Inventor: Kijima, Yukimitsu, Chiba-shi, Chiba (JP); Ito, Tetsumasa, Chiba-shi, Chiba (JP); Nonoyama, Masatoshi, Chiba-shi, Chiba (JP); Miyatani, Tatsuya, Chiba-shi, Chiba (JP); Aoyama, Akira, Chiba-shi, Chiba (JP)
(74) Representative: Sorenti, Gino

(57) **Abstract**

A thin-section slide-sample manufacturing apparatus and a method for manufacturing a thin-section slide sample by cutting out a thin section from an embedded block, transporting the thin section on a conveyor unit, transferring and mounting the thin section on a substrate, the thin-section slide-sample manufacturing apparatus including: a relay having a fixing plane onto which the thin section is fixed detachable; a rotating transportation unit which moves the relay between the conveyor unit and the substrate; and a control unit which moves the relay to the conveyor unit by using the rotating transportation unit, which moves the relay to the substrate where the thin section is detached and transferred to the substrate; wherein, the control unit rotates the relay according to the preliminarily set fixing plane and the relative position of the thin section around a rotation axis provided orthogonal to the fixing plane by using the rotating transportation unit.

## Description

The present invention relates to a thin-section slide-sample manufacturing apparatus and a method for manufacturing thin-section slide samples.

Conventionally, a microtome has been known in general as a tool to use in preparing thin section slide samples for physicochemical experiments and microscopic observations. The thin section slides are prepared by fixing thin sections about several micrometers (for instance, from 3 µm to 5 µm) in thickness on a substrate such as a glass slide. A generally employed method for preparing a thin section sample using a microtome is described below.

An embedded block is prepared by first subjecting a formalin-fixed biological sample taken out from living bodies, laboratory animals, and the like to paraffin substitution, and then solidifying the periphery thereof with paraffin to prepare a solid block. Then, preliminary cutting is carried out by setting the embedded block in a microtome, i.e., a thin sectioning apparatus especially designed for this purpose. By preliminary cutting, the surface of the embedded block is smoothed, and the biological sample, which is intended to be subjected to the experiment or observation, is brought into a state that is exposed to the surface.

Main cutting is carried out upon completion of preliminary cutting. In this process step, the cutting blade of the microtome slices the embedded block to provide ultra-thin sections having a predetermined thickness. In this manner, thin sections having the target plane can be obtained. In such a case, a thin-section slide sample more suitable for observation can be obtained because the thickness of the thin section can be brought closer to the thickness of a cell by thinly slicing the embedded block in micrometer order. Accordingly, ultrathin sections having their thicknesses controlled as much as possible are required. The main cutting is carried out continuously until the desired number of thin sections is obtained.

After the main cutting, thin sections thus obtained are flattened in the flattening process. More specifically, because the thin sections obtained by the main cutting are sliced so thin, they are apt to be wrinkled or curled (U-shaped). Thus, a flattening step is necessary to remove the wrinkles or curls from the thin sections. In this case, for example, the thin sections obtained by main cutting can be floated on water to thereby remove the large wrinkles or curls of the thin sections while avoiding the paraffin containing embedded therein the living body samples from being adhered with each other.

Subsequently, the thin section floating on the surface of the water is scooped with a substrate such as a slide glass and the like to mount it on the substrate. In this manner, a thin-section slide sample can be manufactured as a result.

In the process steps described above, in which the thin section is scooped up with the substrate and mounted thereon, sometimes the thin section partly overhangs the substrate and fails to be properly mounted thereon because the thin sections float with random orientation on the surface of the water. Accordingly, as disclosed in the JP-A-2008-026176, there is known an apparatus which transports the thin section prepared from an embedded block to the position at which the thin section is scooped up with the substrate, while arranging the orientation thereof in a predetermined orientation. This apparatus comprises a water path containing water stored in a space defined by a bottom plane and a pair of side planes disposed to face each other, such that the water flows through the conveyor point and the processing point, and a flow unit for transporting the thin section with the flow of the liquid by running the liquid along the water path from the conveyor point and the processing point. Furthermore, the water path controls the movement of the thin section in such a manner that the orientation of the thin section which had reached the processing point coincides with the predetermined orientation. According to this apparatus, the thin sections transported to the processing point are scooped up and surely mounted on the substrate without checking the orientation one by one.

However, since the known apparatus above transports the thin section with the flow of the liquid, difficulties were found in the case of arranging the direction of the thin section with high precision when an unexpected external force was applied to the liquid to cause disturbances in the flow. Thus, when the thin section was scooped up with the substrates, the direction of the thin section relative to the substrate was found to differ from the predetermined orientation, and difficulties were again found in mounting the substrate with certainty on the substrate.

The present invention has been accomplished under such circumstances, and an objective thereof is to provide a thin-section slide-sample manufacturing apparatus and a method for manufacturing thin-section slide-samples, which are capable of surely mounting a thin section on a substrate in the predetermined orientation.

In order to solve the problems above, the present invention proposes solution means as follows.

According to an aspect of the invention, there is provided a thin-section slide-sample manufacturing apparatus for manufacturing a thin-section slide sample by cutting out a rectangular thin section from an embedded block containing embedded therein a biological sample, transporting the thin section on a conveyor unit, and transferring the thin section on a rectangular substrate disposed at a distance from the conveyor unit, said thin-section slide-sample manufacturing apparatus comprising: a relay having a fixing plane onto which the thin section is fixed detachable; a rotating transportation unit which moves the relay between the conveyor unit and the substrate while rotating the relay around a rotation axis provided orthogonal to the fixing plane; and a control unit which moves the relay to the conveyor unit by using the rotating transportation unit which, after fixing the thin section transported by the conveyor unit to the fixing plane, moves the relay to the substrate where the thin section is detached and transferred to the substrate; wherein, before the thin section is transferred to the substrate, the control unit rotates the relay according to the preliminarily set fixing plane and the relative position of the thin section around the rotation axis by using the rotating transportation unit.

In accordance with another aspect of the present invention, there is provided a method for manufacturing thin-section slide-samples by using a thin-section slide-sample manufacturing apparatus comprising a conveyor unit for transporting rectangular thin sections having cut out from an embedded block containing embedded therein a biological sample, a relay having a fixing plane onto which a thin section is fixed detachable and a rotating transportation unit which moves the relay between the conveyor unit and the rectangular substrate set at a distance while rotating the relay around a rotation axis provided orthogonal to the fixing plane; said method for manufacturing thin-section slide-samples comprises manufacturing thin-section slide samples by transferring the thin sections transported by the conveyor unit to the substrate, comprising: a receiving step which comprises moving the relay to the conveyor unit by using the rotating transportation unit to thereby receive the thin section transported by the conveyor unit and fixing it on the fixing plane, and a delivery step subsequent to the receiving step, which comprises moving the relay to the substrate by using the rotating transportation unit to thereby detach the fixed thin section from the fixing plane and delivering it to the substrate; provided that a rotation step is set between the receiving step and the delivery step, which comprises rotating the relay by using the rotating transportation unit, according to the relative position of the thin section around the rotation axis.

According to the present invention, a rotation step is set between the receiving step and the delivery step, which comprises rotating the relay with the rotating transportation unit based on the relative position of the thin section around the rotation axis. Thus, in the delivery step, the relative orientation of the thin section with respect to the substrate can be set equal to the predetermined orientation. Furthermore, since the thin section is fixed on the fixing plane, the thin section can be surely mounted on the substrate at a predetermined orientation without being influenced by the liquid flow as was the case of conventional techniques.

In accordance with another aspect of the present invention, there is provided the thin-section slide-sample manufacturing apparatus which may further comprise an imaging unit that takes an image of the fixing plane onto which the thin section is fixed; wherein the control unit can rotate the relay with the rotating transportation unit according to the reference data on the predetermined position of the fixing plane and the relative position of the thin section around the rotation axis and to the image taken with the imaging unit.

Further according to another aspect of the invention, there is provided the method for manufacturing thin-section slide-samples, which may further comprise an imaging step that comprises imaging the fixing plane on which the thin section is fixed; wherein the rotation step comprises rotating the relay using the rotating transportation unit according to the reference data of the predetermined position in the fixing plane and the relative position of the thin section around the rotation axis, and to the image taken with the imaging unit.

In the rotation step as stated above, the relay is rotated based on the reference data and the imaging data. Accordingly, in the delivery step, the thin section can be rotated with higher precision to set the relative orientation thereof with respect to the substrate to match the predetermined orientation, and the thin section can be thereby mounted with certainty on the substrate at a predetermined orientation with respect to the substrate.

According to another aspect of the invention, there is provided the thin-section slide-sample manufacturing apparatus in which, by using the rotating transportation unit, the control unit moves the relay with respect to the substrate in the case of transferring the thin section to the substrate according to the reference data and the image data.

In accordance with a still other aspect of the invention, there is provided the method for manufacturing thin-section slide-samples, in which the delivery step comprises moving the relay with respect to the substrate using the rotating transportation unit according to the reference data and the image data.

In the delivery step as stated above, the relay is moved with respect to the substrate according to the reference data and the imaging data. Thus, irrespective of the position on the fixing plane where the thin section is fixed, the thin section can be mounted with certainty on the substrate at a predetermined orientation with respect to the substrate.

Further according to another aspect of the invention, there is provided the thin-section slide-sample manufacturing apparatus, which may comprise a disposal part into which the thin section having fixed on the fixing plane is detached and disposed, wherein the rotating transportation unit comprises the relay formed movable with the disposal part, and the control unit screens the defective thin sections according to the image data, such that the thin section judged defective may be disposed into the disposal part by moving the relay to the thin section using the rotating transportation unit.

In accordance with another aspect of the invention, there is provided the method for manufacturing thin-section slide-samples, which may comprise a disposal step which comprises detaching the thin section fixed to the fixing plane and disposing it from the fixing plane, and a screening step which comprises judging whether the thin section is defective or not according to the imaging data, provided that the screening step may carry out the disposal step in case the thin section is judged defective.

In the screening step as stated above, the thin section judged defective is subjected to the disposal step. Since no defective thin sections are delivered to the substrate, needless operations of thin section delivery can be eliminated to improve the operation efficiency.

Further according to another aspect of the invention, there is provided the thin-section slide-sample manufacturing apparatus which may comprise a relay liquid tank which retains a liquid, wherein the conveyor unit comprising a conveyor having its one end immersed in the relay liquid tank transports the thin section mounted on the top thereof, and the control unit moves the relay by using the rotating transportation unit when the thin section is transferred to the fixing plane and fixed by the conveyor unit, in such a manner that a part of the thin section is detached from the conveyor and set afloat on the surface of the liquid while a part of the rest of the thin section is retained on the surface of the conveyor, such that a part of the thin section is brought into contact with the fixing plane.

Furthermore, according to a still other aspect of the invention, there is provided the method for manufacturing thin-section slide-samples, wherein the thin-section slide-sample manufacturing apparatus comprises a relay liquid tank which retains a liquid and a conveyor unit equipped with a conveyor having its one end immersed in the relay liquid tank, which transports the thin section mounted on the upper plane, and the receiving step comprises moving the relay by using the rotating transportation unit in such a manner that a part of the thin section is brought into contact with the fixing plane in the case a part of the thin section is detached from the conveyor and set afloat on the surface of the liquid, while a part of the rest of the thin section remains on the surface of the conveyor.

In the receiving step as stated above, the thin section is delivered to the relay by setting it afloat on the surface of a liquid. Thus, in the receiving step, the thin section can be flattened to thereby provide a flattened thin section with suppressed deformation on fixing it on the fixing plane. Accordingly, on transferring the thin section to the substrate, the thin section can be mounted with certainty on the substrate at a predetermined orientation with respect to the substrate.

Additionally, the receiving step comprises moving the relay in such a manner that a part of the thin section is brought into contact with the fixing plane in the case a part of the thin section is detached from the conveyor and set afloat on the surface of the liquid, while a part of the rest of the thin section remains on the surface of the conveyor. Thus, in the relay liquid tank, the posture of the thin section while it is on the liquid surface is confined by either the conveyor or the relay. Accordingly, the thin section can be fixed with certainty on the fixing plane.

According to another aspect of the invention, there is provided the thin-section slide-sample manufacturing apparatus, which may comprise a detection unit that detects the thin section set afloat on the surface of the liquid, in which the control unit moves the relay to fix the thin section on the fixing plane by using the rotating transportation unit according to the detection data obtained by the detection unit.

In accordance with a still other aspect of the invention, there is provided the method for manufacturing thin-section slide-samples, which may comprise a detection step for detecting the thin section set afloat the liquid plane, provided that the receiving step comprises moving the relay to fix the thin section on the fixing plane by using the rotating transportation unit according to the detection data obtained in the detection step.

In the receiving step above, the relay is moved by the rotating transportation unit to fix the thin section on the fixing plane according to the detection data acquired in the detection step. Accordingly, the thin section can be fixed with higher certainty on the fixing plane.

According to another aspect of the invention, there is provided the thin-section slide-sample manufacturing apparatus, wherein, on detaching from the conveyor unit, the substrate is moved to the substrate position at which a part thereof is immersed in the relay liquid tank, and the control unit moves the relay by using the rotating transportation unit when the thin section is detached from the fixing plane and transferred to the substrate, in such a manner that a part of the thin section is detached from the relay and set afloat on the surface of the liquid, while a part of the rest of the thin section remains on the fixing plane, such that a part of the thin section is brought into contact with the substrate that is moved to the substrate position.

In accordance with another aspect of the invention, there is provided the method for manufacturing thin-section slide-samples, wherein the thin-section slide-sample manufacturing apparatus is constructed such that the substrate set apart from the conveyor unit is placed at the substrate position with a part thereof immersed in the relay liquid tank, and the delivery step comprises moving the relay by using the rotating transportation unit in such a manner that a part of the thin section is brought into contact with the substrate set at the substrate position in the case a part of the thin section is detached from the relay and set afloat on the surface of the liquid, while a part of the rest of the thin section remains on the surface of the conveyor.

In the delivery step above, the thin section is set afloat on the surface of a liquid for delivery to the substrate. Accordingly, in the delivery step, the thin section can be flattened to thereby provide a high quality flattened thin section with suppressed deformation on the substrate.

Furthermore, since in the above delivery step the relay is moved in such a manner that a part of the thin section is brought into contact with the substrate set at the substrate position in the case a part of the thin section is detached from the relay and set afloat on the surface of the liquid while a part of the rest of the thin section remains on the fixing plane, the posture of the thin section that is on the liquid surface of the relay liquid tank is confined by either the relay or the substrate. Accordingly, the thin section can be fixed on the substrate with higher certainty at a predetermined orientation with respect to the substrate.

According to another aspect of the invention, there is provided the thin-section slide-sample manufacturing apparatus, which may comprise a substrate conveyor unit which clamps and arranges the substrate to set the substrate in the substrate position, which is also capable of moving up and down the substrate with respect to the liquid plane of the relay liquid tank, and, before the fixed thin section is detached and transferred from the fixing plane to the substrate, the control unit operates the substrate conveyor unit to immerse the substrate in the liquid retained in the relay liquid tank deeper than the substrate position and then to pull up the substrate to set the substrate at the substrate position.

In accordance with a still other aspect of the invention, there is provided the method for manufacturing thin-section slide-samples, wherein the thin-section slide-sample manufacturing apparatus may comprise a substrate conveyor unit which clamps and arranges the substrate to set the substrate in the substrate position, which is also capable of moving up and down the substrate with respect to the liquid plane of the relay liquid tank, and the delivery step comprises, by using the substrate conveyor unit, immersing the substrate in the liquid retained in the relay liquid tank deeper than the substrate position and then pulling up the substrate to set the substrate at the substrate position.

In the delivery step above, by using the substrate conveyor unit, the substrate is immersed in the liquid retained in the relay liquid tank deeper than the substrate position and then pulled up to set the substrate at the substrate position. Thus, the surface of the substrate can be wetted with the liquid retained in the relay liquid tank in the case a part of the thin section is brought into contact with the substrate placed at the substrate position, such that the liquid surely fixes the thin section on the surface of the substrate. Accordingly, the posture of the thin section while it is on the liquid surface of the relay liquid tank is confined by the relay; hence, the thin section can be fixed on the substrate with higher certainty at a predetermined orientation with respect to the substrate.

According to another aspect of the invention, there is provided the thin-section slide-sample manufacturing apparatus, wherein the fixing plane has a mesh pattern formed in such a manner that it penetrates the relay in a direction crossing the fixing plane.

In the case above, the liquid absorbed by the thin section while it was set afloat on the liquid surface can be ejected to the other side of the fixing plane through the mesh pattern formed on the fixing plane. Thus, the formation of a liquid film can be prevented while imparting hydrophilic properties to the fixing plane, and the thin section can be stably fixed on the fixing plane. Accordingly, on delivering the thin section fixed on the fixing plane to the substrate, the thin section can be fixed on the substrate with higher certainty at a predetermined orientation with respect to the substrate.

In accordance with another aspect of the invention, there is provided the thin-section slide-sample manufacturing apparatus, which may comprise a cleaner liquid tank which retains a liquid, wherein the rotating transportation unit is formed movable on the cleaner liquid tank.

In the case above, the rotating transportation unit is formed movable on the cleaner liquid tank. Thus, the relay can be moved to the cleaner liquid tank by using the rotating transportation unit to clean the fixing plane before the fixing plane becomes too contaminated to carry out the fixing of the thin section. The cleanliness of the fixing plane can be maintained in this manner, and on fixing the thin section transported by the conveyor unit and receiving with the fixing plane, the thin section can be fixed with certainty on the fixing plane.

According to another aspect of the invention, there is provided the thin-section slide-sample manufacturing apparatus, in which the rotating transportation unit comprises a gripper which is capable of clamping and releasing the relay, a rotary table having a relay formed mountable thereon to rotate the mounted relay around the rotation axis, and a transfer part which moves the gripper in such a manner that the relay can be transferred among the conveyor unit, the substrate, and the rotary table; wherein the control unit moves the relay clamped by the gripper to the rotary table by using the transfer part when the relay is rotated around the rotation axis, and after releasing the relay from the gripper to mount the relay on the rotary table, rotates the relay by using the rotary table.

In the case above, the rotary table need not be moved by using the transfer part, and as compared with the case of moving a mechanism for rotating the relay around the rotation axis together with the gripper, the constitutional part of the thin-section slide-sample manufacturing apparatus that is moved by the transfer part can be made compact. In this manner, the distance of moving the thin section on transferring the thin section to the substrate can be shortened to improve the operation efficiency on transferring the thin section.

According to another aspect of the invention, there is provided the thin-section slide-sample manufacturing apparatus, wherein the relay is formed in a disk-like shape, and the gripper holds the relay by clamping the outer peripheral part thereof.

In the case above, since the relay is formed in a disk-like shape and hence the outer periphery is equi-shaped irrespective of the position in the periphery, the outer peripheral part of the relay can be easily clamped by the gripper. Thus, the operation efficiency in transferring the thin section can be further improved.

In accordance with another aspect of the invention, there is provided the thin-section slide-sample manufacturing apparatus, wherein a concave groove is formed over the entire circumference of peripheral part of the relay, and the gripper comprises a first member and a second member that are disposed faced with each other, such that the relay is clamped by bringing them close to each other and that the relay is released by taking them apart from each other; provided that the first member comprises a contact plane formed on the outer peripheral plane of the first member which is brought into contact with the outer peripheral plane of the relay in the case the relay is clamped with the second member, and the second member comprises an engaging convex groove that matches with the concave groove, which is formed on the second member at a distance from the other to clamp the relay.

In the case above, when clamping the relay with the gripper, the contact plane of the first member is brought into contact with the outer peripheral plane of the relay, and the engaging convex part of the second member is engaged with the concave groove of the relay. Thus, by using the gripper, it is possible to clamp the relay tightly positioned in the peripheral direction so as to stably set the posture of the clamped relay. In this manner, on transferring the thin section fixed on the relay to the substrate, the thin section can be mounted with certainty on the substrate at a predetermined orientation with respect to the substrate.

According to the invention, the present invention enables mounting a thin section on a substrate with certainty at a predetermined orientation with respect to the substrate.

Embodiments of the present invention will now be described by way of further example only and with reference to the accompanying drawings, in which:
Figure 1 is a perspective view of a thin-section slide sample manufactured by a thin-section slide-sample manufacturing apparatus according to the present invention.
Figure 2 is a top view of a thin-section slide-sample manufacturing apparatus according to a first embodiment of the present invention.
Figure 3 is a front elevation of the thin-section slide-sample manufacturing apparatus shown in Figure 2.
Figure 4 is a control block diagram of the thin-section slide-sample manufacturing apparatus shown in Figure 2.
Figure 5 is a cross section view of the part in the vicinity of the relay liquid tank according to the thin-section slide-sample manufacturing apparatus shown in Figure 2.
Figure 6 is a side view of the part in the vicinity of the substrate conveyor unit according to the thin-section slide-sample manufacturing apparatus shown in Figure 2.
Figure 7 is a planar view of the relay according to the thin-section slide-sample manufacturing apparatus shown in Figure 2.
Figure 8 is a partially enlarged view showing a state in which the relay is clamped with a gripper unit.
Figure 9 is a partial cross section view showing a state in which the relay is clamped with a gripper unit as shown in Figure 7.
Figure 10 is a diagram explaining the reference data previously retained in the control unit.
Figure 11 is a process step diagram which explains the method for manufacturing thin-section slide-samples using the thin-section slide-sample manufacturing apparatus shown in Figure 2.
Figure 12 is a process step diagram which explains the method for manufacturing thin-section slide-samples using the thin-section slide-sample manufacturing apparatus shown in Figure 2.
Figure 13 is a process step diagram which explains the method for manufacturing thin-section slide-samples using the thin-section slide-sample manufacturing apparatus shown in Figure 2.
Figure 14 is a process step diagram which explains the method for manufacturing thin-section slide-samples using the thin-section slide-sample manufacturing apparatus shown in Figure 2.
Figure 15 is a process step diagram which explains the method for manufacturing thin-section slide-samples using the thin-section slide-sample manufacturing apparatus shown in Figure 2.
Figure 16 is a process step diagram which explains the method for manufacturing thin-section slide-samples using the thin-section slide-sample manufacturing apparatus according to a second embodiment according to the present invention.
Figure 17 is a process step diagram which explains the method for manufacturing thin-section slide-samples using the thin-section slide-sample manufacturing apparatus according to a second embodiment according to the present invention.
Figure 18 is a process step diagram which explains the method for manufacturing thin-section slide-samples using the thin-section slide-sample manufacturing apparatus according to a second embodiment according to the present invention.
Figure 19 is a process step diagram which explains the method for manufacturing thin-section slide-samples using the thin-section slide-sample manufacturing apparatus according to a third embodiment according to the present invention.

### _(First Embodiment)

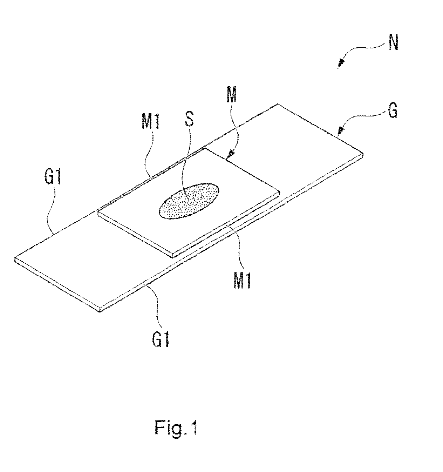

A thin-section slide-sample manufacturing apparatus according to a first embodiment of the invention is described below by making reference to the drawings. Referring to Figures 1 to 4, a thin-section slide-sample manufacturing apparatus 1 is an apparatus which manufactures a thin-section slide sample N by thinly cutting out an embedded block B having embedded therein a biological sample S to obtain a rectangular (oblong) thin section M, and transferring the thin section M to the surface of a rectangular (oblong) slide glass (substrate) G to mount thereon.

### (Thin-section slide sample)

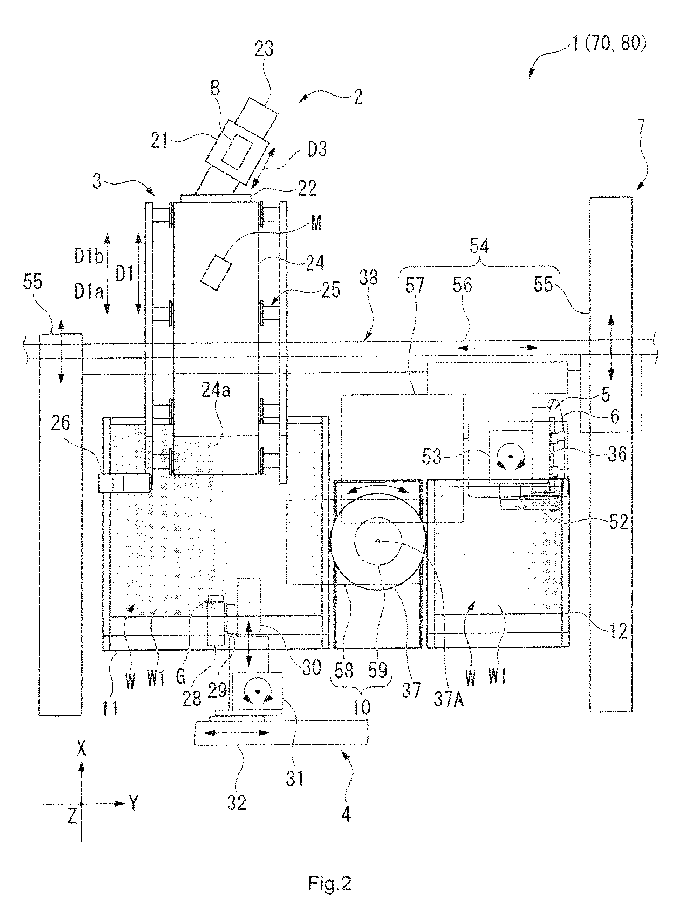

First, brief explanation on the thin section M is given below. The thin section M is, as shown in Figure 1, is prepared by thinly cutting a long box-shaped embedded block B (reference can be made to Figure 2) into ultrathin sections such as 3 µm to 5 µm in thickness. The embedded block B is obtained by subjecting a formalin-fixed biological sample S to paraffin substitution to substitute the inner water with paraffin, and solidifying its periphery with an embedding agent such as paraffin and the like to obtain a block. In this manner, the biological sample S can be embedded in paraffin. As the biological sample S, there can be mentioned, for instance, a tissue such as an organ obtained from living bodies and laboratory animals and the like, which is properly selected depending on the relevant field, such as medical, pharmaceutical, food, biological, and the like. In Figure 2 and later on, the biological sample S is omitted from the drawing for the sake of simplicity.

The thin-section slide sample N comprises the thin section M and the slide glass G having the thin section M mounted on the surface thereof. In this instance, the thin section M provided on the thin-section slide sample N is mounted on the slide glass G with a predetermined orientation with respect to the slide glass G. In the present embodiment, the thin section M is mounted on the upper plane of the slide glass G in such a manner that their corresponding sides M1 and G1 are disposed faced with each other in planar view. Furthermore, in the example shown in the figure, the thin section M is mounted in such a manner that the sides M1 and G1 corresponding to the slide glass G and the thin section M are disposed to set in parallel with each other. In this manner, the thin-section slide sample N having the thin section M mounted on the slide glass G comprises a side G1 set along the longitudinal direction of the slide glass G and a side M1 set along the longitudinal direction of the thin section M, which are disposed in parallel with each other, and are suitably used for easy physicochemical experiments, microscopic observations, and the like.

Descriptions on the thin-section slide-sample manufacturing apparatus 1 are given below.

### (Thin-section slide-sample manufacturing apparatus)

Referring to Figures 2 to 4, the thin-section slide-sample manufacturing apparatus 1 is equipped with a thin-sectioning unit 2 which thinly cuts the embedded block B to prepare the thin section M; a conveyor unit 3 which transports the thin section M cut out by the thin-sectioning unit 2; a substrate conveyor unit 4 which grips the slide glass G at a position distant from the conveyor unit 3; a relay 6 having a fixing plane 5 on which the thin section M is detachably fixed; a rotating transportation unit 7 which moves the relay 6 between the conveyor unit 3 and the slide glass G and rotates the relay 6 around a later stated rotation axis 37A set perpendicular to the fixing plane 5; a table 8 which supports the constituent parts; and a control unit 9 which controls the thin-sectioning unit 2, the conveyor unit 3, the substrate conveyor unit 4, and the rotating transportation unit 7. Furthermore, in the present embodiment, there is also provided an imaging unit 10 which takes the image of the fixing plane 5 of the relay 6, on which the thin section M is fixed, and a relay liquid tank 11 and a cleaner liquid tank 12 in which water (liquid) is retained; the imaging unit 10 is also controlled by the control unit 9.

### (Thin-sectioning unit)

Referring to Figure 2, the thin-sectioning unit 2 is equipped with a stage 21 for supporting the embedded block B; a cutter 22 for thin-sectioning the embedded block B; a cutting stage 23 which relatively moves the stage 21 and the cutter 22 forward and backward along a cutting direction D3 set in parallel with the horizontal plane, thereby preparing the thin section M by thin-sectioning the embedded block B with the cutter 22; and a not shown Z stage which adjusts the position of the embedded block B with respect to the cutter 22 by relatively moving the stage 21 and the cutter 22 forward and backward along the Z-direction perpendicular to the horizontal plane.

In the example shown in the figure, the cutter 22 is fixed in the X-direction in parallel with the horizontal plane, and the blade edge is fixed in its longitudinal direction to coincide with the Y-direction which is perpendicular to the X-direction. In the cutting stage 23, the stage 21 is moved along the cutting direction D3 that crosses with the X-direction in the horizontal plane, such that the stage 21 and the cutter 22 are relatively moved forward and backward along the cutting direction D3. In the example shown in the figure, the cutter 22 is fixed in the Z-direction, and the Z-stage moves the stage 21 along the Z-direction. In this manner, the stage 21 and the cutter 22 are relatively moved forward and backward along the Z-direction.

In the thin-sectioning unit 2 having the constitution above, the Z stage adjusts the Z-direction position of the embedded block B with respect to the cutter 22 to control the thickness of the thin section M that is thin-sectioned by the cutter 22; thus, thin section M can be prepared by the cutting stage 23 in which the embedded block B is thin-sectioned by using the cutter 22.

Further, the stage 21 is provided supportable in such a manner that the longitudinal direction of the embedded block B may be set in parallel with the cutting direction D3.

### (Relay liquid tank)

The relay liquid tank 11 is provided on the table 8 at a position distant from the cutter 22 in the X-direction, and in the example shown in the figure, it is provided as a concave part in the table 8.

### (Conveyor unit)

The conveyor unit 3 transports the thin section M to the relay liquid tank 11; the thin section M mounted on the surface is transported. The conveyor unit 3 is equipped with a conveyor belt (conveyor) 24 whose one end 24a is immersed in the relay liquid tank 11, rollers 25 which are wound with the conveyor belt 24, and a not shown driving unit which drives one of the rollers 25 to run the conveyor belt 24.

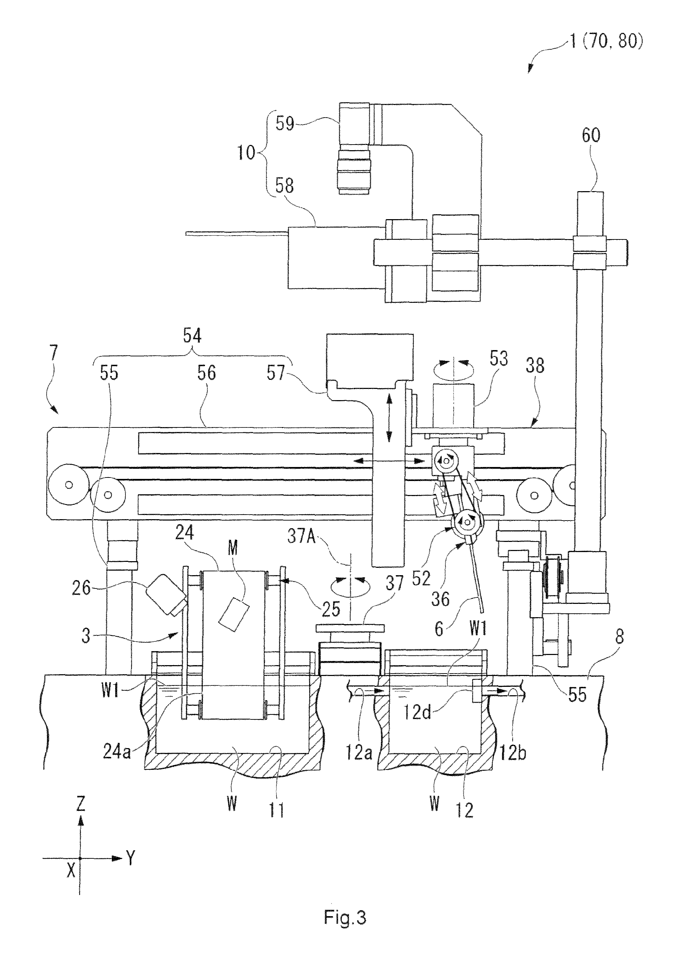

In the example shown in the drawing, the conveying direction D1 of the thin section M transported by the conveyor belt 24 is set along the X-direction in the planar view of the thin-section slide-sample manufacturing apparatus 1, and the conveyor belt 24 is extended along the X-direction in the planar view. That is, the conveying direction D1 is tilted with respect to the cutting direction D3 in the planar view. The rollers 25 are provided spaced from each other along the X-direction in planar view, and of the rollers 25, the front roller which is set at the side nearest to the thin-sectioning unit 2 is set near to the upper side of the cutter 22. Thus, while being cut by the cutter 22, the front end of the thin section M is pulled up and received by the conveyor belt 24. As shown in Figure 3, the part of the conveyor belt 24 in the X-direction disposed to the side of the relay liquid tank 11 is gradually headed downward towards the relay liquid tank 11, and the one end 24a is immersed in the water W retained in the relay liquid tank 11.

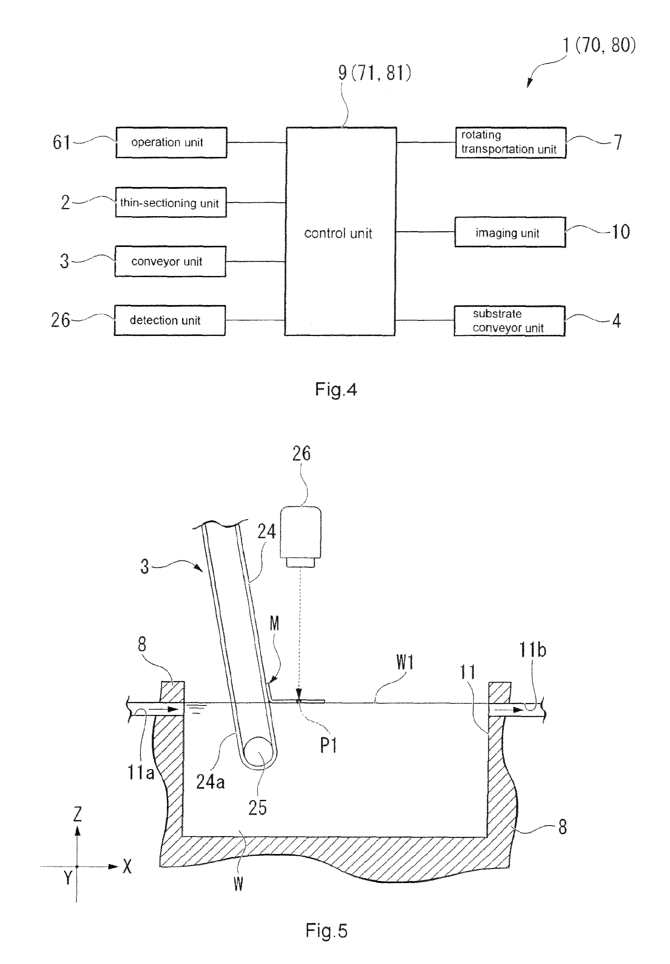

According to the conveyor unit 3 having the constitution above, as shown in Figure 2, the thin section M that was cut by the thin-sectioning unit 2 is received by the upper plane of the conveyor belt 24, and is sent to the advancing direction D1a to the relay liquid tank 11 along the conveying direction D1. Furthermore, as shown in Figure 5, when a part of the thin section M transported by the conveyor unit 3 reaches the end 24a, a part of the thin section M is detached from the upper plane of the conveyor belt 24 by the surface tension of water W, and the thin section M starts to move along the water surface (liquid plane) W1. Thus, while moving along the X-direction in the water surface W1, the thin section M gradually detaches from the conveyor belt 24.

In the present embodiment, the relay liquid tank 11 comprises a liquid inlet 11a for introducing water W into the relay liquid tank 11, and a liquid outlet 11 b for discharging the water W from the relay liquid tank 11. In the example shown in the figure, the water W in the vicinity of the water surface W1 of the relay liquid tank 11, that is, the water W in the surface layer of the relay liquid tank 11, is introduced from the liquid inlet 11a and discharged from the liquid outlet 11b, so that it may run in parallel along the conveying direction D1 towards the advancing direction D1a in planar view. In this manner, the running direction of the water W in the surface layer is matched with the direction of detaching the thin section M from the upper plane of the conveyor belt 24 to establish a smooth detachment.

### (Detection unit)

Referring to Figure 5, a detection unit 26 is provided in the vicinity of the relay liquid tank 11 to detect the thin section M set afloat on the water surface W1. The detection unit 26 is installed to detect a thin section M at such a state that a part of the thin section M is detached from the conveyor belt 24 and set afloat on the water surface W1, while another part is remained on the upper plane of the conveyor belt 26. In the example shown in the figure, the thin section M is detected when the thin section M transported by the conveyor belt 24 floats at the detection point P1, which is an area defined along the X-direction from the detaching position, i.e., the crossing point of the upper plane of the conveyor belt 24 and the water surface W1, for a size within the longitudinal length of the thin section M set afloat on the water surface W1. The detection unit 26 sends the detection timing to the control unit 9 on detecting the thin section M.

In the example shown in the figure, the detection unit 26 is, for example, a light-shield type photoelectronic sensor, and the detection unit 26 is installed at the upper side of the relay liquid tank 11, so that the signal light penetrates the water surface W1 of the relay liquid tank 11.

### (Substrate conveyor unit)

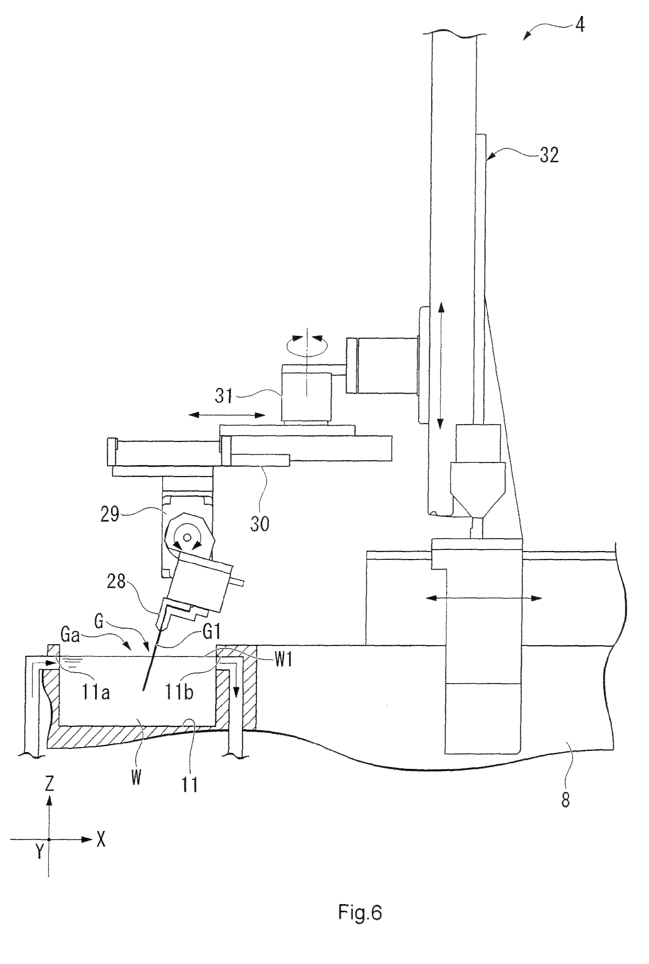

As shown in Figures 2 and 6, the substrate conveyor unit 4 detachably clamps the slide glass G from a not shown slide glass storage rack, and transports the clamped slide glass G from the relay liquid tank 11 to the not shown thin-section slide sample storage rack. Referring to Figure 6, in the present embodiment, the substrate conveyor unit 4 is equipped with a gripper 28 which clamps, or which is formed capable of clamping the slide glass G; a tilt actuator 29 which supports the gripper 28 rotatable around a tilt axis set parallel with the horizontal plane; a slide table 30 which supports the tilt actuator 29 reciprocally movable along a direction orthogonal to the tilt axis and in parallel with the horizontal plane; a swing actuator 31 which supports the slide table 30 rotatable around the swing axis along the Z-direction; and an orthogonal tri-axial robot 32 fixed on the table 8, which moves the swing actuator 31 in three directions, i.e., X-direction, Y-direction that is perpendicular to X-direction and parallel to the horizontal plane, and Z-direction.

In the example shown in Figure 2, the substrate conveyor unit 4 is placed on the other side of the conveyor unit 3 with the relay liquid tank 11 interposed in planar view, and in the advancing side D1a of the conveying direction D1.

Further, the orthogonal tri-axial robot 32 is placed such that the gripper 28 can be moved among the relay liquid tank 11, the slide glass storage rack, and the thin-section slide sample storage rack. The tilt actuator 29, the slide table 30, and the swing actuator 31 are provided to finely adjust the position of the gripper 28 when moved by the orthogonal tri-axial robot 32 to the slide glass storage rack or to the thin-section slide sample storage rack.

In accordance with the substrate conveyor unit 4 as above, a slide glass G can be taken out from the slide glass storage rack, and a thin-section slide sample N, which is a slide glass G having mounted thereon a thin section M, can be stored in the thin-section slide sample storage rack. In the present embodiment referring to Figure 6, when the gripper 28 clamps the slide glass G, it is controlled by the control unit 9 such that the gripper 28 clamps the slide glass G by one end in the longitudinal direction of the slide glass G.

Further, in the present embodiment referring to Figure 6, the substrate conveyor unit 4 is formed as such that, on receiving and delivering the thin section M, it may place the slide glass G at a substrate position Ga, which is distant from the conveyor unit 3 and at which a part of the slide glass G is immersed in the relay liquid tank 11. In the example shown in the figure, the slide glass G placed at the substrate position Ga is clamped by one end, in such a manner that the other end in the longitudinal direction can be immersed in the water W retained in the relay liquid tank 11, and that the upper plane thereof is set along Y-direction and faces in the backward conveying direction D1b. In addition, the slide glass G placed at the substrate position Ga is clamped in such a manner that its side G1 taken along the longitudinal direction thereof is set in parallel with the conveying direction D1 as seen in planar view.

By using the substrate conveyor unit 4 above, the slide glass G can be clamped and arranged at the substrate position Ga, and simultaneously, the slide glass G can be moved upward and downward in the relay liquid tank 11 with respect to the water surface W1.

### (Cleaner liquid tank)

Referring to Figure 2, the cleaner liquid tank 12 is set on the table 8 at a position distant in the Y-direction from the relay liquid tank 11; it is provided as a concave part on the table 8 in the example shown. The size of the cleaner liquid tank 12 taken along the X-direction is smaller than the size of the relay liquid tank 11 taken along the X-direction, and the cleaner liquid tank 12 is set in the inner side along X-direction of the relay liquid tank 11.

In the present embodiment shown in Figure 3, the cleaner liquid tank 12 comprises a liquid inlet 12a for introducing water W into the cleaner liquid tank 12, and a liquid outlet 12b for discharging the water W from the cleaner liquid tank 12. In the example shown, the water W in the vicinity of the water surface W1 of the cleaner liquid tank 12, that is, the water W in the surface layer of the cleaner liquid tank 12, is introduced from the liquid inlet 12a and discharged from the liquid outlet 12b, so that it may run in the direction along the water surface W1.

Furthermore, a filter 12d is provided to cover the liquid outlet 12b to filter off the cut wastes generating from the thin section M retained in the water W of the cleaner liquid tank 12, to thereby prevent the cut wastes from being sucked by the liquid outlet 12b. The filter 12d is provided detachable from the cleaner liquid tank 12, so that it may be exchanged when the filter 12d becomes clogged with the cut waste.

### (Relay)

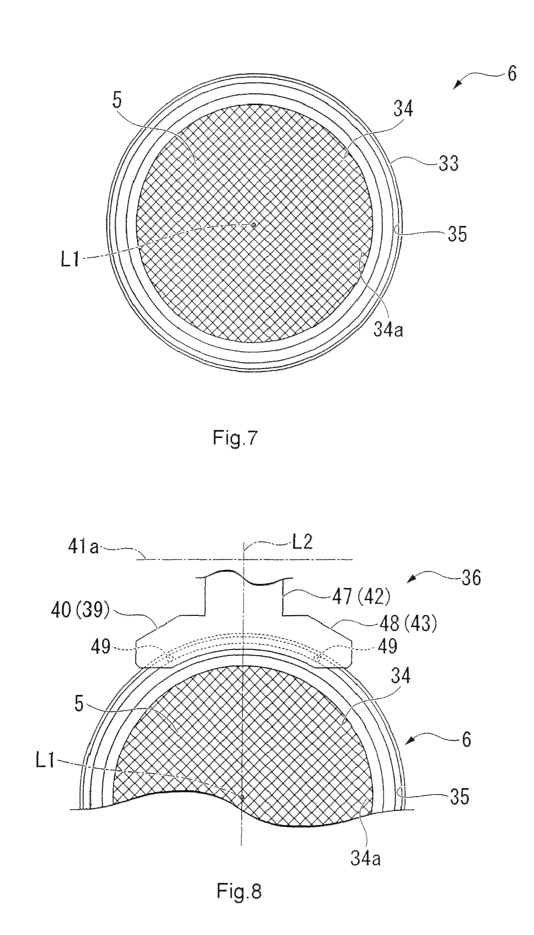

As shown in Figure 7, the relay 6 is formed in a disk-like shape. In the present embodiment, the relay 6 comprises a ring-shaped frame 33 and a mesh part 34 fixed to the inner peripheral plane of the frame 33. In the relay 6 having the constitution above, the frame 33 functions as the outer periphery of the relay 6, while the surface of the mesh part 34 provides the fixing plane 5.

Furthermore, a concave groove 35 is formed on one end of the frame 33 to cover the entire area in the peripheral direction. In addition, a mesh 34a is formed in the fixing plane 5, which penetrates the mesh part 34 along the direction crossing the fixing plane 5. In the example shown, the mesh part 34 has a circular appearance, such that the central axis line of the mesh part 34 and the central axis line of the frame 33 coincide with the central axis line L1 of the relay 6.

### (Rotating transportation unit)

Referring to Figures 2 and 3, the rotating transportation unit 7 is equipped with a gripper unit 36 which is capable of clamping and releasing the relay 6; a rotary table 37, which is capable of mounting thereon the relay 6 and of rotating the mounted relay 6 around the rotation axis 37A; a conveyor unit 3; and a transfer part 38, which moves the gripper unit 36 in such a manner that the relay 6 can be moved among the slide glass G clamped at the substrate position Ga, the rotary table 37, and the cleaner liquid tank 12.

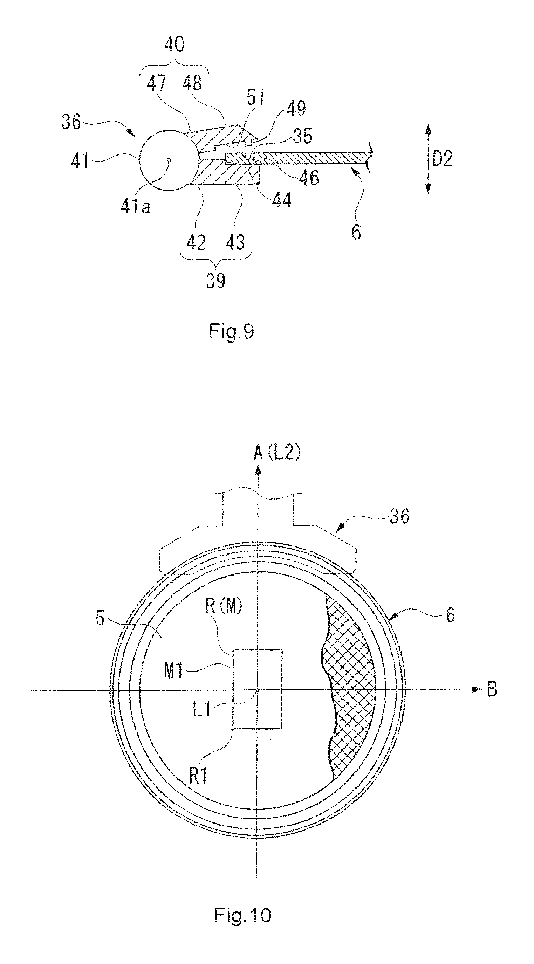

In the present embodiment as shown in Figure 8, the gripper unit 36 clamps a peripheral part of the frame 33 provided to the relay 6 from the outer side in the radius direction of the relay 6. As shown in Figure 9, the gripper unit 36 holds the relay 6 by clamping the frame 33. In the example shown, the gripper unit 36 comprises a first member 39 and a second member 40 disposed faced with each other, which are brought nearer for clamping the relay 6 and are set apart to release the relay 6, and a driving unit 41 which brings the first member 39 and the second member 40 closer or sets them apart. In the example shown, the first member 39 and the second member 40 are each supported by the driving unit 41 by one end, such that both members are rotated around the driving axis 41 a to approach each other or move apart. The operation of the driving unit 41 is controlled by the control unit 9.

Referring to Figure 8, the first member 39 comprises a first base part 42 whose one end is supported by the driving unit 41, and a first clamping part 43 connected to the other end of the first base part 42, which is formed to match with the frame 33 of the relay 6. In the example shown, the first member 39 as a whole is formed in a Y-shaped planar form as viewed in the clamping direction D2 on clamping the relay 6, and in an axisymmetrical shape with respect to the reference axis L2, which is orthogonal to the driving axis 41a and passes through the central axial line of the relay 6 held by the gripper unit 36.

Further, as shown in Figure 9, a contact plane 44 is formed in the first clamping part 43, which is to be brought into contact with the outer peripheral plane of the relay 6 in the case the second member 40 is operated together to clamp the relay 6. In the first clamping part 43 of the example shown, a concave part located on the side opposite to the first base part 42 is formed in the inner plane faced with the second member 40; thus, the cross section view of the first clamping part 43 shows that it is L-shaped. Among the planes constituting the concave part, the plane facing in the clamping direction D2 on clamping the relay 6 brings the first clamping plane 46 into contact with the edge plane of the relay 6, such that the extension of the first clamping plane 46 makes the contact plane 44.

Further, in the example shown, the second member 40 comprises a second base part 47 whose one end is supported by the driving unit 41, and a second clamping part 48 connected to the other end of the second base part 47, which is formed to match with the frame 33 of the relay 6. The second member 40 as a whole is formed in a Y-shaped planar form as viewed in the clamping direction D2, and is formed in an axisymmetrical shape with respect to the reference axis L2.

In the second clamping part 48, two engaging convex parts 49 are provided distant to each other, which are engaged with the concave groove 35 of the frame 33 on clamping the relay 6 together with the first member 39. In the second clamping part 48 of the example shown, a concave part located on the side opposite to the second base part 47 is formed in the inner plane faced with the first member 39; thus, the cross section view of the second clamping part 48 shows that it is L-shaped. Among the planes constituting the concave part, the plane facing in the clamping direction D2 on clamping the relay 6 brings the second clamping plane 51 into contact with the edge plane of the relay 6. Thus, the engaging convex parts 49 are each provided as protrusions on the second clamping plane 51 at axisymmetrical positions with respect to the reference axis L2.

On using the gripper unit 36 as described above, the relay 6 is held by the gripper unit 36 in the following manner. The contact plane 44 of the first member 39 is brought into contact with the outer peripheral plane of the relay 6, and at the same time, the engaging convex parts 49 provided on the second member 40 are engaged with the concave groove 35 provided on the relay 6. Thus, by using the gripper unit 36, it is possible to hold the relay strictly positioned. The shape and the number of the engaging parts 49 are not limited to those shown in the example.

Referring to Figure 2, the rotary table 37 is provided between the relay liquid tank 11 and the cleaner liquid tank 12, as a disk smaller than the external shape of the relay 6 as seen in the planar view. Further referring to Figure 3, the rotary table 37 is set protruded on table 8, and the upper plane thereof is provided such that the relay 6 can be mounted thereon with its fixing plane 5 set in parallel with the horizontal plane. Further, the rotary table 37 turns around the rotation axis 37A, which is the central axis set along the Z-direction.

By using the rotary table 37 above, the fixing plane 5 of the relay 6 mounted on the upper plane thereof becomes orthogonal to the rotation axis 37A; thus, the relay 6 can be rotated around the rotation axis 37A while maintaining the fixing plane 5 perpendicular to the rotation axis 37A.

Referring to Figures 2 and 3, the transfer part 38 is equipped with a tilting mechanism 52 which supports the relay 6 held by the gripper unit 36 to make it rotatable around the tilt axis set in parallel with the horizontal plane; a turning mechanism 53 which supports the tilting mechanism 52 rotatable around the pivot axis along the Z-direction; and an orthogonal tri-axial robot 54 fixed on the table 8, which moves the turning mechanism 53 in the three directions of X-, Y-, and Z-direction.

As shown in Figure 3, the tilting mechanism 52 is provided rotatable around the tilt axis until the fixing plane 5 of the relay 6 held by the gripper unit 36 comes to a posture parallel to the horizontal plane from the original posture set along the Z-direction. The tilt axis is provided in parallel with the driving axis 41a of the gripper unit 36.

Referring to Figures 2 and 3, orthogonal tri-axial robot 54 comprises a pair of X-transfer parts 55 established on the table 8, which comprises interposed between them along Y direction the relay liquid tank 11, the cleaner liquid tank 12, and the rotary table 37; a Y-transfer part 56 set bridged on the pair of X-transfer parts 55, which is moved along X direction by the X-transfer parts 55; and a Z-transfer part 57 supported by the Y-transfer part 56, which is moved along Y direction by the Y-transfer part 56. As shown in Figure 3, the upper end of the X-transfer parts 55 is located higher than the upper end of the conveyor unit 3, and the Z-transfer part 57 is provided movable along the Z direction to move the relay 6 held by the gripper unit 36 from the height at which it is immersed in the relay liquid tank 11 and the cleaner liquid tank 12, to the position located higher than the upper plane of the rotary table 37.

By using the transfer part 38 as above, the relay 6 held by the gripper unit 36 can be moved among the conveyor unit 3, the slide glass G clamped at the substrate position Ga, the rotary table 37, and the cleaner liquid tank 12.

### (Imaging unit)

The imaging unit 10 comprises an illumination system 58 which irradiates light to the rotary table 37 from the upper side, and an imaging camera 59 which takes the image of the rotary table 37 illuminated by the illumination system 58 from the upper side and sends the imaging data to the control unit 9. In the example shown, the illumination system 58 is, for instance, an epi-illumination system.

Referring to Figure 3, the illumination system 58 and the imaging camera 59 are provided fixed to the upper side of the rotary table 37 via a fixing member 60 fixed to the X-transfer part 55. The illumination system 58 and the imaging camera 59 are set at the upper side of the top end of the orthogonal tri-axial robot 54 provided in the transfer part 38; thus, the transport of the relay 6 using the transfer part 38 is not prevented by the imaging unit 10.

### (Control unit)

Referring to Figure 10, the control unit 9 memorizes the reference data that are used in the rotation step described hereinafter, which provides the positions of the previously set fixing plane 5 and the relative position of the thin section M around the rotation axis 37A. In the figure shown, the reference data comprise the relative position of the fixing plane around the central axis line L1, as well as the position of the reference thin section R, which is the thin section M fixed in the fixing plane 5 of the relay 6 held by the gripper unit 36, in such a manner that the center of the thin section M is aligned to match with the central axis line L1 of the relay 6, and that the side M1 set along the longitudinal direction of the thin section M is parallel with the reference axis L2. More specifically, the gradient of the side M1 in the reference thin section R with respect to the reference axis L2 is memorized.

Further referring to Figure 4, an operation unit 61 is provided for an external operator to input information into the control unit 9 of the thin-section slide-sample manufacturing apparatus 1.

The details of controlling each of the components with the control unit 9 are described below together with the method for manufacturing thin-section slide-samples.

### (Method for manufacturing thin-section slide-samples)

A method for manufacturing thin-section slide-samples according to a present embodiment is described below.

Referring to Figure 2, a setting step which comprises setting an embedded block B to a stage 21 is carried out first. In this case, the relative gradient in the longitudinal direction of the embedded block B is set to make a predetermined direction with respect to the conveying direction D1. In the example shown, the operator sets the embedded block B in stage 21 in such a manner that the longitudinal direction thereof is parallel with the cutting direction D3.

Then, the control unit 9 controls the thin-sectioning unit 2 to carry out the thin-sectioning step which comprises cutting out a thin section M from the embedded block B. Thus, a rectangular thin section M is mounted on the conveyor belt 24 in such a manner that the side M1 in the longitudinal direction is tilted with respect to the conveying direction D1 (in a state set along the cutting direction D3). In the present embodiment, the embedded block B and the thin section M are simply moved forward and backward along the cutting direction D3 when thin-sectioning the thin section M from the embedded block B. Thus, every time the thin section M is cut out, the deviation in the position of the thin section M transferred to the conveyor belt 24 can be suppressed to thereby stably mount the thin section M at a predetermined position in the Y-direction of the conveyor belt 24.

Subsequently in the delivering step, the control unit 9 runs the conveyor belt 24 by driving the driving unit of the conveyor unit 3, so as to deliver the thin section M to the relay liquid tank 11. In this instance, the driving unit is controlled by the control unit 9 in such a manner that the thin section M can be delivered at a previously memorized delivery speed.

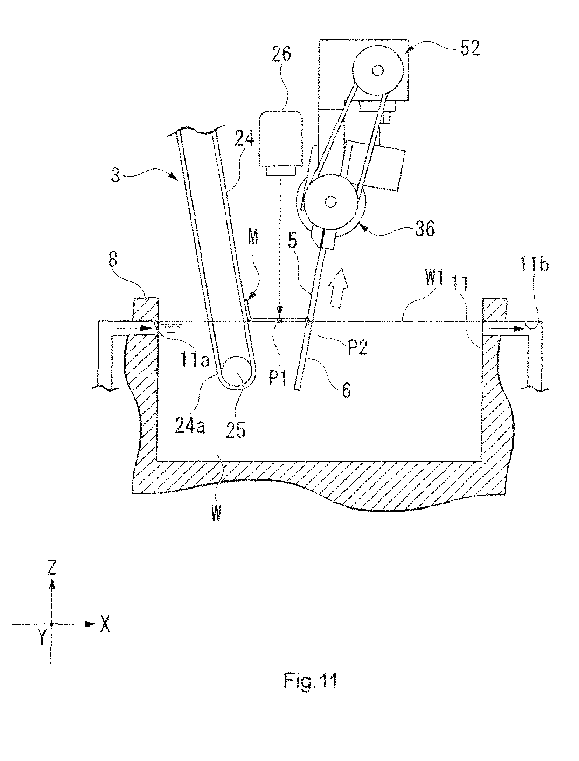

Further, as shown in Figure 11, the control unit 9 moves the relay 6 to the conveyor unit 3 by using the rotating transportation unit 7 to carry out the receiving step, in which the thin section M transferred by the conveyor unit 3 is received by the fixing plane 5 on the relay 6.

More specifically in the receiving step, a first transfer step is carried out, in which the relay 6 is moved to the conveyor unit 3 by controlling the transfer part 38 using the control unit 9. In this case, the control unit 9 moves the relay 6 by using the rotating transportation unit 7 in such a manner that a part of the thin section M is brought into contact with the fixing plane 5, such that a part of the thin section M is detached from the conveyor belt 24 and set afloat on the water surface W1, while a part of the rest of the thin section M remains on the surface of the conveyor belt 24.

In the example shown, the control unit 9 moves the relay 6 in such a manner that the gripper 36 may be positioned on the upper side of the relay 6, and that the reference axis L2 coincides with the conveying direction D1 in planar view. In addition, the relay 6 is moved as such that the fixing plane 5 is faced with the conveyor belt 24 in the X-direction, and that the fixing plane 5 is set along the Y-direction. Furthermore, a part of the relay 6 is immersed in the water W retained in the relay liquid tank 11, and the relay 6 is moved in such a manner that the distance taken along X-direction between the position at which the upper plane of the conveyor belt 24 crosses with the water surface W1 and a fixing initiation position P2, at which the fixing plane 5 crosses with the water surface W1, should be shorter than the length of the thin section M taken along the longitudinal direction, and that the fixing initiation position P2 should be placed farther than the detection position P1 in X-direction with respect to the conveyor belt 24. In the example shown, the relay 6 is moved to set apart the fixing plane 5 from the conveyor belt 24 with approaching the upper side.

The control unit 9 carries out the first transfer step before the thin section M reaches the detection position P1, more preferably, before the advancing side of the section M in the advancing direction D1 a of the conveying direction D1 reaches the water surface W1.

Subsequently, comes the detection step comprising detecting the thin section M set afloat on the water surface W1 by using the detection unit 26. In this case, the detection timing at which the thin section M arrived at the detection position P1 is sent to the control unit 9 from the detection unit 26.

In the detection step, after the thin section M is detected, a pulling up step is effected, in which the thin section M transported by the conveyor unit 3 is received with the fixing plane 5 of the relay 6 for fixing. In the present embodiment, the control unit 9 moves the gripper 36 as such that the relay 6 is pulled up from the water W retained in the relay liquid tank 11.

In this instance, the control unit 9 calculates the timing at which the fixing plane 5 arrives at the fixing initiation position P2 based on the conveyor speed of the conveyor belt 24, the distance between the detection position P1 and the fixing initiation position P2 taken along X-direction, and the detection timing. Then, based on this timing, the control unit 9 starts pulling up the relay 6 using the transfer part 38, while adjusting the direction and the speed of pulling up the relay 6 with respect to the water surface W1.

As a result, thin section M transferred with the conveyor unit 3 is received by the fixing plane 5 of the relay 6 and fixed on the fixing plane 5.

Thus is completed the receiving step.

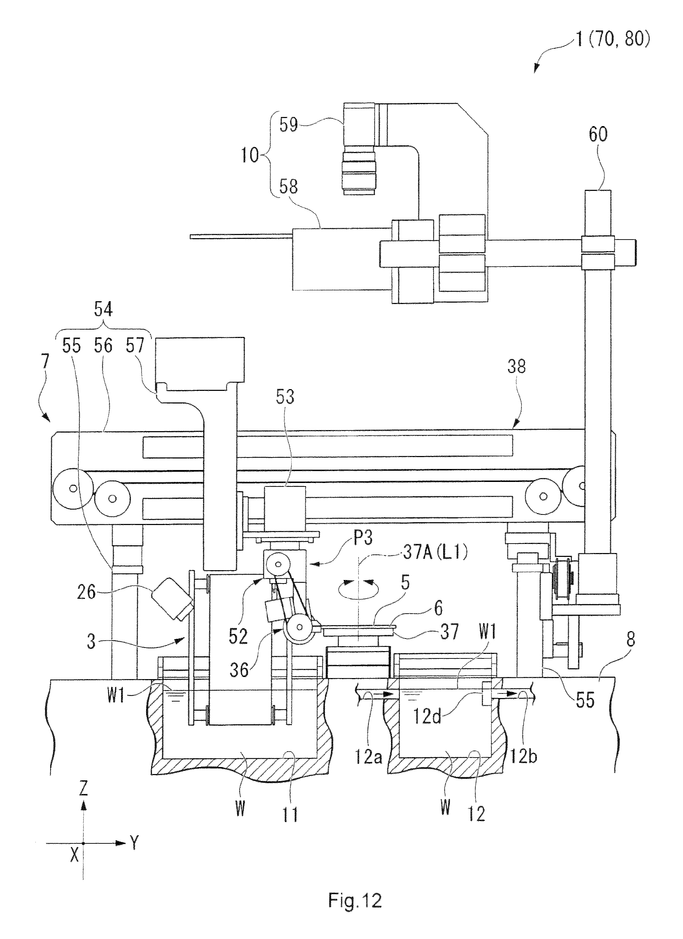

Subsequently, as shown in Figure 12, a second transfer step comprising moving the relay 6 to the rotary table 37 by using the transfer part 38 is carried out. In the present embodiment, the control unit 9 moves the relay 6 by using the transfer part 38, in such a manner that the fixing plane 5 is set in parallel with the water surface at the upper side of the rotary table 37, and that the thin section M is fixed to the upper side of the relay 6. In this instance, the control unit 9 controls the transfer part 38 in such a manner that the central axis line L1 of the relay 6 coincides with the rotation axis 37A of the rotary table 37. Then, the control unit 9 lowers the relay 6 by using the Z-transfer part 57 to mount the relay 6 on the rotary table 37. The relative position of the gripper 36 with respect to the rotary table 37 in the case the relay 6 is mounted on the rotary table 37 is denoted as a gripping position P3. Then, the control unit 9 releases the relay 6 from the gripper 36 located at the gripping position P3, and sets the gripper 36 apart from the rotary table 37 by using the transfer part 38.

Then, an imaging step, which comprises taking the image of the fixing plane 5 having fixed thereon the thin section M, is carried out. In the present embodiment, the control unit 9 irradiates light to the relay 6 mounted on the rotary table 37 by using the illumination system 58, and takes an image of the light-irradiated relay 6 by using the imaging camera 59. After taking the image of the relay 6, the imaging camera 59 sends the imaging data to the control unit 9.

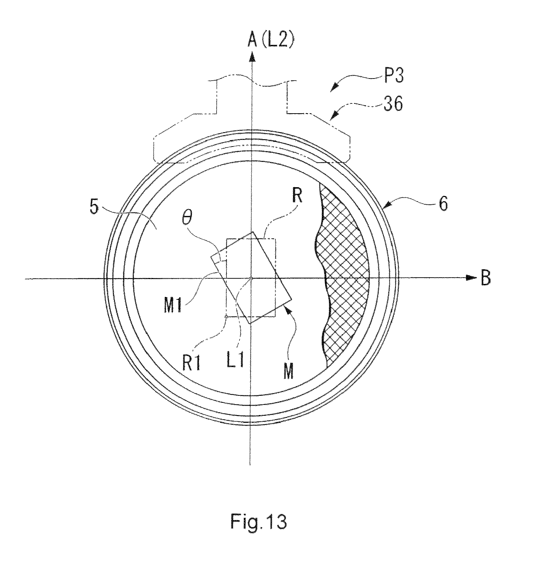

Referring to Figure 13, description is given to a case when the relay 6 is gripped at the gripping position P3, in which the center of the thin section M fixed to the fixing plane 5 coincides with the center of the reference thin section R taken as the reference data, but tilted for a rotation angle of θ. More specifically, the side M1 taken along the longitudinal direction of the thin section M is tilted by a rotation angle of θ with respect to the reference axis L2 when the relay 6 is gripped at the gripping position P3. For instance, in such a case, the conveying direction D1 is presumed to be tilted by an angle of θ with respect to the cutting direction D3.

Subsequently, the rotation step, in which the relay 6 is rotated by using the rotating transportation unit 7 based on the reference data and the imaging data, is carried out. In this case, the rotation is effected in such a manner that the relative orientation of the thin section M with respect to the slide glass G should coincide with the predetermined direction in the later delivery step. In the present embodiment, the relay 6 is rotated by the rotating transportation unit 7 in such a manner that the slide glass G and the thin section M transferred to the slide glass G have their sides M1 and G1 in parallel with each other as seen in planar view.

In this instance, the control unit 9 first calculates the rotation angle based on the imaging data and the reference data. Then, the relay 6 is rotated for the calculated rotation angle θ around the rotation axis 37A in such a manner that, when the relay 6 is held at the gripping position P3 and the thin section M is placed on the fixing plane 5, the tilt of the longitudinal side M1 of the thin section M with respect to the reference axis L2 should coincide with the tilt of the longitudinal side M1 of the thin section R placed on the fixing plane 5 with respect to the reference axis L2 in the reference data.

Subsequently, the delivery step is carried out, in which the control unit 9 moves the relay 6 to the slide glass G by using the rotating transportation unit 7, where the thin section M fixed on the fixing plane 5 is detached and delivered to the slide glass G.

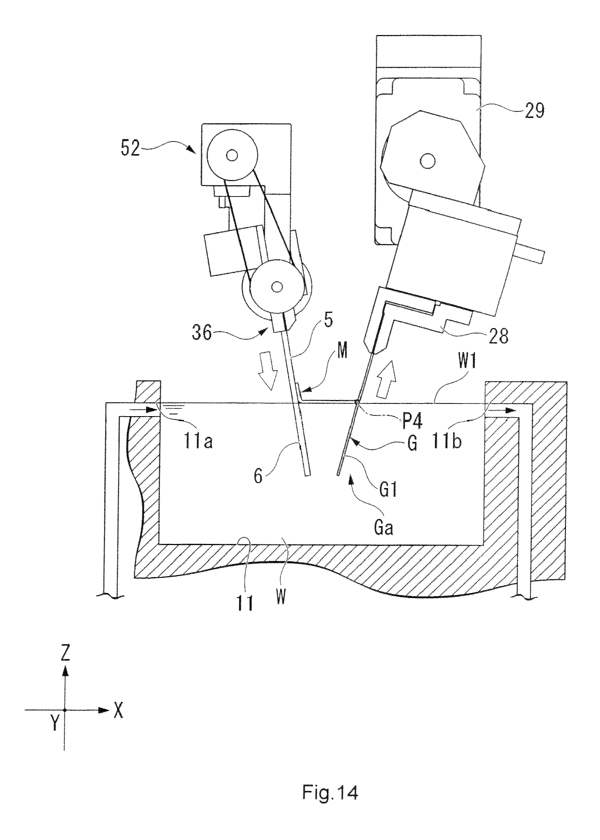

More specifically, in the delivery step as shown in Figure 14, firstly, the control unit 9 effects a substrate setting step in which the slide glass G is held at the substrate position Ga by the substrate conveyor unit 4. In this instance of the present embodiment, the control unit 9 operates the substrate conveyor unit 4 to immerse the slide glass G in the water W retained in the relay liquid tank 11 to a depth deeper than that of the substrate position Ga, and then draws up the slide glass G to set it to the substrate position Ga. In this manner, the surface of the slide glass G can be wetted with the water W retained in the relay liquid tank 11.

The control unit 9 furthermore effects the third transfer step which comprises moving the relay 6 to the slide glass G held at the substrate position Ga. In this instance, the control unit 9 moves the gripper 36 by using the transfer part 38 to hold the relay 6 mounted on the rotary table 37 at the gripping position P3. As described earlier, the relay 6 is rotated in such a manner that, when the relay 6 is held at the gripping position P3 and the thin section M is placed on the fixing plane 5, the tilt of the longitudinal side M1 of the thin section M with respect to the reference axis L2 coincides with the tilt of the longitudinal side M1 of the thin section R placed on the fixing plane 5 with respect to the reference axis L2 as in the reference data. Accordingly, the longitudinal side M1 of the thin section M is set in parallel with the reference axis L2. Furthermore, since the center of the reference thin section R corresponds to that of the thin section M, the position of the thin section M on the fixing plane 5 is in concordance with the position of the reference thin section R on the fixing plane 5 according to the reference data. By then gripping the relay 6 with the gripper 36, the control unit 9 moves the relay 6 to the relay liquid tank 11 by using the transfer part 38.

Furthermore, in parallel with the third transfer step, a detaching step for detaching the thin section M from the relay 6 is carried out. In the present embodiment, the control unit 9 moves the relay 6 using the transfer part 38, in such a manner that a part of the thin section M is detached from the relay 6 and set afloat on the water surface W1, in which a part of the thin section M is transferred to the slide glass G set at the substrate position Ga while a part of the rest of the thin section M remains on the fixing plane 5.

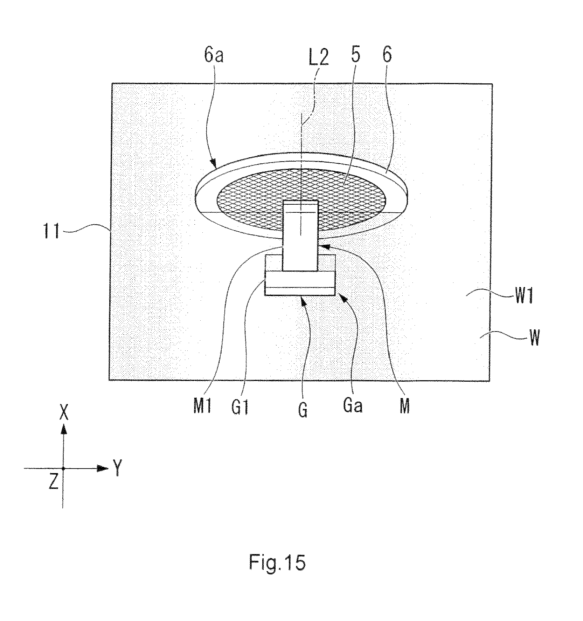

The third transfer step and the detaching step are described by making reference to Figures 14 and 15. Firstly, by using the transfer part 38, the control unit 9 moves the relay 6 to a delivery position 6a previously set on the relay liquid tank 11. The delivery position 6a is determined in advance by taking the position of the reference thin section R on the fixing plane 5 according to the reference data. In the reference shown, the relay 6 is moved in such a manner that the gripper 36 may be positioned at the upper side of the relay 6, and that the thin section M fixed on the fixing plane 5 may be disposed along the X-direction and facing the slide glass G set at the substrate position Ga. Furthermore, it is moved such that while setting the fixing plane 5 along the Y-direction, the longitudinal G1 side of the slide glass G at the substrate position Ga is set in parallel with the reference axis L2 as seen in planar view. In this manner, the side G1 of the slide glass G and the side M1 of the thin section M fixed on the fixing plane 5 can be set in parallel with each other. Furthermore, the relay 6 is moved such that, in the planar view above, both the longitudinal sides M1 of the thin section M are positioned in the inner side of both the longitudinal sides G1 of the slide glass G set at the substrate position Ga (see Fig. 15). In this manner, the sides M1 and G1 of the thin section M and the slide glass G, respectively, can be disposed facing each other in planar view.

Subsequently, the transfer part 38 operates the control unit 9 to lower the relay 6 at a predetermined detaching speed and at a predetermined tilt angle with respect to the water surface W1. In the example shown, the control unit 9 lowers the relay 6 along the X-direction towards the side of the slide glass G while maintaining the position in Y-direction fixed. Thus, when the relay 6 is lowered such that a part of the thin section M fixed on the fixing plane 5 reaches the water surface W1, the thin section M partly detaches from the fixing plane 5 by the surface tension of the water W, and moves along the water surface W1. As a result, the thin section M is gradually detached from the fixing plane 5 while moving along the X-direction on the water surface W1. In the present embodiment, the thin section M can be smoothly detached from the fixing plane 5, because a liquid inlet 11 a and a liquid outlet 11 b are provided to the relay liquid tank 11 to run the water W in the surface layer of the relay liquid tank 11 in parallel with the conveying direction D1 towards the advancing direction D1a as seen in planar view.

In addition, the control unit 9 adjusts the position of the relay 6 in the X-direction based on the initial position of delivery P4 corresponding to the point at which the plane facing the relay 6 side in the X-direction of the slide glass G set at the substrate position Ga crosses the water surface W1 in the relay liquid tank 11, and on the longitudinal length of the thin section M; the control unit 9 then lowers the relay 6 in such a manner that a part of the thin section M is brought into contact with the slide glass G before the thin section M is completely detached from the fixing plane 5. Furthermore, the control unit 9 determines the timing at which a part of the thin section M touches the slide glass G according to the detaching speed, the detaching tilt, the position in X-direction of the relay 6, and the initial position of delivery P4.

Then, the control unit 9 runs the substrate pulling up step to pull up the slide glass G by using the substrate conveyor unit 4 when it is judged that a part of the thin section M contacts the slide glass G. In this instance, the control unit 9 calculates the pulling up speed and the pulling direction of the slide glass G with respect to the water surface W on using the substrate conveyor unit 4, such that the thin section M can be fixed on the upper plane of the slide glass G.

As a result, the slide glass G having mounted thereon the thin section M is pulled up from the water W retained in the relay liquid tank 11 to complete the delivery step. In this manner, the thin section M can be surely mounted on the slide glass G at a predetermined orientation with respect to the slide glass G.

Then, in the present embodiment, the control unit carries out the storage step which comprises storing the thin-section slide sample N, which is the slide glass G having mounted thereon the thin section M, in the thin-section slide sample storage rack by using the substrate conveyor unit 4.

Furthermore, in the present embodiment, a cleaning step is carried out, in which the control unit 9 operates the rotating transportation unit 7 to move the relay 6 after delivering the thin section M to the cleaner liquid tank 12, where the fixing plane 5 is cleaned. In this instance, by using the rotating transportation unit 7, the control unit 9 immerses the relay 6 in the water W inside the cleaner liquid tank 12 in such a manner that the water W running in the surface layer along the water current inside the cleaner liquid tank 12 may pass through the mesh 34a of the mesh part 34. In this manner, the fixing plane 5 of the relay 6 can be smoothly and surely cleaned.

According to the thin-section slide-sample manufacturing apparatus 1 and the method for manufacturing thin-section slide-samples of the invention above, a rotation step is incorporated between the receiving step and the delivery step, which comprises rotating the relay 6 using the rotating transportation unit 7 based on the predetermined fixing plane 5 and the relative position of the thin section M around the rotation axis 37A. Thus, in the delivery step, the thin section M can be rotated to set the relative orientation with respect to the slide glass G as predetermined. In the present embodiment, the relay 6 can be rotated with the rotating transportation unit 7 in such a manner that the sides, G1 and M1 of the slide glass G and the thin section M delivered to the slide glass G, respectively, are in parallel with each other as seen in the planar view. Furthermore, since the thin section M is fixed on the fixing plane 5, it remains unaffected by the liquid flow as affected in the prior art technologies. Thus, in the delivery step, the thin section M can be mounted with higher certainty on the slide glass G at a predetermined orientation with respect to the slide glass G.

In the rotation step, the relay 6 is rotated based on the reference data and the imaging data. Accordingly, in the delivery step, highly precise rotation can be made to set the relative orientation of the thin section M as predetermined with respect to the slide glass G. Thus, the thin section M can be mounted with higher certainty on the slide glass G at a predetermined orientation with respect to the slide glass G.

Furthermore, in the receiving step, the thin section M is set afloat on the water surface W1 for delivery to the relay 6. Accordingly, flattening of the thin section M can be effected at the same time in the receiving step; i.e., the thin section M fixed on the fixing plane 5 can be flattened so as to suppress the deformation. Thus, the variation in the shape of the thin section M fixed on the fixing plane 5 can be prevented from occurring, and on transferring the thin section M to the slide glass G, the thin section M can be mounted with higher certainty on the slide glass G at a predetermined orientation with respect to the slide glass G.

Further in the receiving step, the relay 6 is moved to bring a part of the thin section M into contact with the fixing plane 5 in such a manner that a part of the thin section M is detached from the conveyor belt 24 and set afloat on the water surface W1 while a part in the rest of the thin section M stays retained on the upper plane of the conveyor belt 24. Thus, in the relay liquid tank 11, the posture of the thin section M on the water surface W1 is regulated by either the conveyor belt 24 or the relay 6. Accordingly, it becomes possible to surely fix the thin section M on the fixing plane 5, while also suppressing the fluctuation occurring in the position of the thin section M when placed on the fixing plane 5. Thus, on transferring the thin section M to the slide glass G, the thin section M can be mounted with higher certainty on the slide glass G at a predetermined orientation with respect to the slide glass G.

In the receiving step, the relay 6 is moved by the rotating transportation unit 7 based on the detection data obtained in the detection step to fix the thin section M on the fixing plane 5. Thus, the thin section M can be more surely fixed on the fixing plane 5, and at the same time, the fluctuation in the position of the thin section M can be more strictly suppressed. Accordingly, on transferring the thin section M to the slide glass G, the thin section M can be mounted with higher certainty on the slide glass G at a predetermined orientation with respect to the slide glass G.

Furthermore, since the mesh 34a is formed on the fixing plane 5, the water W absorbed by the thin section M while being set afloat on the water surface W1 can be discharged from the fixing plane 5 to the opposite side through the mesh 34a. Accordingly, it is possible to prevent a water film from being formed on the fixing plane 5 while rendering it hydrophilic, to thereby fix the thin section M stably on the fixing plane 5. Thus, on transferring the thin section M to the slide glass G, the thin section M can be mounted with higher certainty on the slide glass G at a predetermined orientation with respect to the slide glass G.

Further in the delivery step, since the thin section M is transferred to the slide glass G by floating it on the water surface W1, the thin section M can be flattened in the delivery step to thereby provide a high quality flattened thin section M with suppressed deformation on the slide glass G.

In the delivery step, since the relay is moved in such a manner that a part of the thin section M is brought into contact with the slide glass G set at the substrate position Ga in the case a part of the thin section M is detached from the fixing plane 5 and set afloat on the water surface W1 while a part of the rest of the thin section M remains on the fixing plane 5, the posture of the thin section that is on the water surface W1 of the relay liquid tank 11 is confined by either the relay 6 or the slide glass G. Accordingly, the thin section M can be fixed on the slide glass G with higher certainty at a predetermined orientation with respect to the slide glass G.

Further in the delivery step, by using the substrate conveyor unit 4, the slide glass G is immersed in the water W retained in the relay liquid tank 11 deeper than the substrate position Ga and then pulled up to set the slide glass G at the substrate position Ga. Thus, the surface of the slide glass G can be wetted with the water W retained in the relay liquid tank 11 when a part of the thin section M is brought into contact with the slide glass G placed at the substrate position Ga, such that the water W surely fixes the thin section M on the surface of the slide glass G. Accordingly, the posture of the thin section M while it is on the water surface W1 of the relay liquid tank 11 is confined by the relay 6, and hence, the thin section M can be fixed on the slide glass G with higher certainty at a predetermined orientation with respect to the slide glass G.

Further, since the rotating transportation unit 7 is formed movable on the cleaner liquid tank 12, the relay 6 can be moved to the cleaner liquid tank 12 by using the rotating transportation unit 7 to clean the fixing plane 5 before the fixing plane 5 becomes too contaminated to carry out the fixing of the thin section M. Accordingly, the cleanliness of the fixing plane 5 can be maintained, and on fixing the thin section M transported by the conveyor unit 3 and receiving with the fixing plane 5, the thin section M can be fixed with certainty on the fixing plane 5.

The rotary table 37 need not be moved by using the transfer part 38, and as compared with the case of moving a mechanism for rotating the relay 6 around the rotation axis 37A together with the gripper 36, the constitutional part of the thin-section slide-sample manufacturing apparatus 1 that is moved by the transfer part 38 can be made compact. In this manner, the distance of moving the thin section M on transferring the thin section M to the slide glass G can be shortened to improve the operation efficiency on transferring the thin section M.

Since the relay 6 is formed in a disk-like shape and the frame 33 is equi-shaped irrespective of the position in the periphery, the frame 33 of the relay 6 can be easily clamped by the gripper 36. Thus, the operation efficiency in transferring the thin section M can be further improved.

Further, since the first member 39 comprises a contact plane 44 and the second member 40 comprises an engaging convex part 49, the posture of the relay 6 gripped by the gripper 38 can be stably set. In this manner, on transferring the thin section M fixed on the relay 6 to the slide glass G, the thin section M can be mounted with certainty on the slide glass G at a predetermined orientation with respect to the slide glass G.

### (Second Embodiment)

A second embodiment according to the invention is described below. In the second embodiment, the parts that are the same as in the first embodiment are referred to using the same symbols and descriptions are given only to those parts different to or not described in the first embodiment.

In the thin-section slide-sample manufacturing apparatus 70 according to the present embodiment as shown in Figure 10, position parameters for one of the reference corners R1 of the reference thin section R, taken in A-B axial system comprising the reference axis L2 as A-axis and the axis orthogonal to A-axis and passing through the central axis line L1 along the fixing plane 5 as B-axis, are stored in the control unit 71 as the reference data. The details of the control unit 71 are described below together with the method for manufacturing thin-section slide-samples.

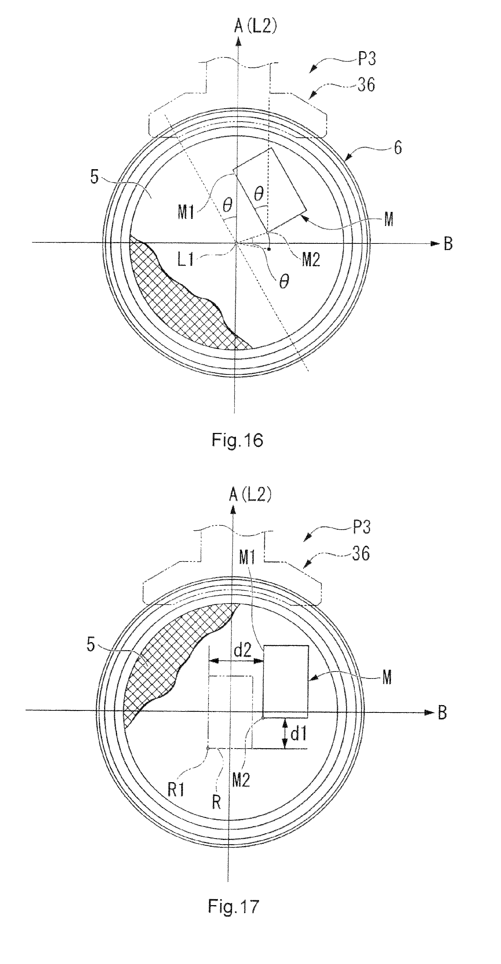

According to the method for manufacturing thin-section slide-samples of the present embodiment using the thin-section slide-sample manufacturing apparatus 70, the method is carried out in the same manner as in the first embodiment by following the steps up to the imaging step. In the present embodiment referring to Figure 16, the description is made of the case in which the thin section M fixed on the fixing plane 5 is displaced from the central axis line L1, and the side M1 taken along the longitudinal direction of the thin section M is tilted by a rotation angle of θ with respect to the side M1 of the reference thin section R.

Then, the control unit 71 carries out the rotation step. In this instance, the rotation angle θ is calculated in the same manner as in the first embodiment, and the relay 6 is rotated for the calculated rotation angle θ around the rotation axis 37A in such a manner that, when the relay 6 is held at the gripping position P3 and the thin section M is placed on the fixing plane 5, the tilt of the longitudinal side M1 of the thin section M with respect to the reference axis L2 should coincide with the tilt of the longitudinal side M1 of the thin section R placed on the fixing plane 5 of the reference data with respect to the reference axis L2.

In this case, as shown in Figures 16 and 17, the control unit 71 calculates the position parameters for the corner M2 of the reference thin section M fixed on the fixing plane 5 according to the imaging data, which corresponds to the reference corner R1, and at the same time the position parameters for the corner M2 after rotation according to the rotation angle θ. Then, the displacements d1 and d2 of the thin section R fixed on the fixing plane 5 along the A-axis and B-axis directions, respectively, with respect to the reference thin section R, are calculated based on the position parameters of the reference corner R1 and of the corner M2 after rotation.

The delivery step is carried out thereafter. In this case, the control unit 71 relatively moves the relay 6 and the slide glass G by using the rotating transportation unit 7 and the substrate conveyor unit 4, respectively, based on the reference data and the imaging data. In the present embodiment, the control unit 71 relatively moves the relay 6 and the slide glass G in such a manner that the respective sides M1 and G1 of the slide glass G and the thin section M transferred to the slide glass G are disposed to face each other in the planar view.

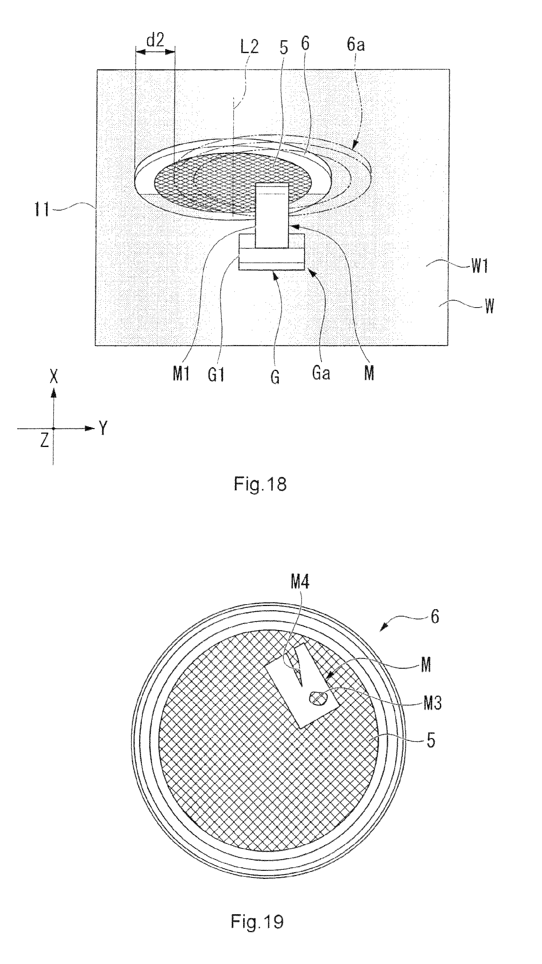

More specifically referring to Figure 18, the control unit 71 moves the slide glass G to the substrate position Ga in the substrate setting step, and in the third transfer step and the detaching step thereafter, it moves the relay 6 to a position displaced by d2, i.e., the displacement of the thin section M along B-axis direction along Y-direction, from the delivery position 6a. The control unit 71 then lowers the relay 6 to detach a part of the thin section M, and determines the timing at which a part of the thin section M contacts the slide glass G by using the detaching speed, the detaching tilt, the position of the relay 6 in the X-direction, the initial position of delivery P4, and the displacement d1 along the A-axis.

Then, by carrying out the substrate pulling up step in the same manner as in the first embodiment, the control unit 71 pulls up the slide glass G having mounted thereon the thin section M from the water W retained in the relay liquid tank 11. The delivery step is completed in this manner.

According to the thin-section slide-sample manufacturing apparatus 70 and the method for manufacturing thin-section slide-samples above, the same functional effect as that of the first embodiment can be obtained.

In the delivery step, since the relay 6 and the slide glass G are moved relatively according to the reference data and the imaging data, the thin section M can be mounted with higher certainty on the slide glass G at a predetermined orientation with respect to the slide glass G irrespective of the position at which the thin section M is fixed on the fixing plane 5.

The present embodiment comprises operating the control unit 71 to move the relay 6 to a position displaced from the delivery position 6a with the slide glass G being set at the substrate position Ga by using the transfer part 38, but is not limited thereto. For instance, in the delivery step, the control unit 9 can be set to control the rotating transportation unit 7 as such that the relay 6 is moved to the delivery position 6a, while displacing the substrate position Ga of the slide glass G by using the substrate conveyor unit 4, or the delivery position 6a and the substrate position Ga may each be moved for the adjustment.

### (Third Embodiment)

Third embodiment according to the present invention is described below. In the third embodiment, the parts that are the same as in the second embodiment are referred to using the same symbols and descriptions are given only to those parts different to or not described in the first and second embodiments.

In the thin-section slide-sample manufacturing apparatus 80 according to the present embodiment, the control unit 81 is provided so as to evaluate whether the thin section M is defective or not according to the imaging data obtained by the imaging unit 10. In the present embodiment, the area of the reference thin section R is stored in the control unit 81 as the reference data, and the control unit 81 judges the thin section M as defective, for example, when the area thereof is smaller than that of the reference thin section R, or as shown in Figure 19, when it is a thin section M having an inner opening M3 or a thin section M having a crack M4 in the outer periphery.

Then, when the thin section M is evaluated defective, the control unit 81 moves the relay 6 to the cleaner liquid tank 12 by using the rotating transportation unit 7 to discard the thin section M. That is, the cleaner liquid tank 12 constitutes the disposal part for detaching and disposing the thin section from the fixing plane 5.

Furthermore, in the method for manufacturing thin-section slide-samples using the thin-section slide-sample manufacturing apparatus 80 according to the present embodiment, a case in which a defective thin section M is fixed on the fixing plane 5 is described below. The method is carried out in the same manner as in the second embodiment following the steps up to the imaging step.

Then, after the imaging step, the control unit 81 carries out the screening step to judge whether the thin section M is defective or not. When the thin section M is judged defective in the screening step, the disposal step is carried out in which the thin section M fixed on the fixing plane 5 is detached from the fixing plane 5 and discarded. In the present embodiment, the control unit 81 moves the relay 6 to the cleaner liquid tank 12, and by immersing the relay 6 in the water W inside the cleaner liquid tank 12, the thin section M is detached from the fixing plane 5 for disposal. The operator may exchange the filter 12d thereafter to discard the cut waste filtered off by the filter 12d.

According to the thin-section slide-sample manufacturing apparatus 80 and the method for manufacturing thin-section slide-samples described above, the same functional effect as that of the first and second embodiments can be obtained.

Further in the screening step, since the disposal step is carried out in the case the thin section M is judged defective, no defective thin sections M are delivered to the slide glass G. Thus, needless delivery operation of the thin section M can be eliminated to improve the operation efficiency in delivering the thin section M.

The technical area of the present invention is not only limited to the embodiments above, and various changes and modifications can be made so far as they do not deviate from the scope of the invention.

For instance, the conveyor unit 3 is not only limited to the one shown in the embodiment so long as it can deliver the thin section M.

Further, the gripper 36 of the rotating transportation unit 7 is not only limited to the one described in the embodiment so long as it is capable of clamping and releasing the relay 6.

The embodiments above are equipped with the thin-sectioning unit 2, but the thin-sectioning unit 2 is not indispensable. For instance, a thin section M thin-sectioned from an embedded block B by using other instrument can be transported by the conveyor unit 3.

Furthermore, the embodiments above are equipped with a substrate conveyor unit 4, but the substrate conveyor unit 4 is not essential. For example, a fixing member for fixing the slide glass G at the substrate position Ga may be provided, and in the delivery step, the thin section M may be mounted on the slide glass G by increasing the water flow discharged from the liquid outlet 11 b of the relay liquid tank 11 to thereby lowering down the water surface W1.

In the embodiments above, the thin section M and the slide glass G are both provided in rectangular shapes, but the invention is not only limited thereto. For instance, the thin section M may be square-shaped (quadrate); such that the sides thereof may not be in correspondence with the sides of the slide glass G. In such a case, when the thin section M is mounted on the slide glass G in a predetermined orientation, the respective sides of the slide glass G and the thin section M may be disposed simply facing with each other. Further, the thin section M and the slide glass G may be polygonal or disk-shaped.

In the substrate setting step of each of the embodiments, the slide glass G is immersed in the water W in the relay liquid tank 11 deeper than the substrate position Ga by using the substrate conveyor unit 4, and the slide glass G is then pulled up to set it at the substrate position Ga, but the present invention is not limited only thereto.

Further, in the embodiments above, the thin-section slide-sample manufacturing apparatus 1, 70, or 80 is equipped with an imaging unit 10, but it can be implemented without the imaging unit 10. For instance, by using an operation unit 61, the operator can input the rotation angle θ into the control unit 9, 71, or 81 as a relative position of the previously set thin section M on the fixing plane 5 around the rotation axis 37A.

In the above embodiments, a relay liquid tank 11 is provided, but the relay liquid tank 11 can be omitted. For instance, the thin section M and the relay can be oppositely charged to positive and negative charges while also charging the relay and the slide glass G with opposite charges of positive and negative, such that the thin section M may be attached to the relay by using static electricity.

Furthermore, in the above embodiments, water W is retained as the liquid in the relay liquid tank 11 and the cleaner liquid tank 12, but the liquid is not limited only to water W.

In the embodiments above, the delivery step and the receiving step are both carried out in the relay liquid tank 11, but the invention is not limited only thereto; for instance, the receiving step may be carried out in the cleaner liquid tank 12.

Furthermore, the cleaner liquid tank 12 is provided in each of the above embodiments, but the cleaner liquid tank 12 is not essential.

Further, the detection unit 26 is provided in each of the above embodiments, but the detection unit 26 can be omitted. For instance, based on the timing of thin-sectioning the thin section M by using the thin-sectioning unit and the transportation speed of the conveyor unit 3, the control unit 9, 71, or 81 may calculate the timing of initiating the pulling up step.

In each of the embodiments above, the fixing plane 5 comprises a mesh 34a formed in such a manner that it penetrates the relay 6 and in a direction crossing the fixing plane 5, but the mesh 34a is not indispensable.

Further, in each of the embodiments above, the rotating transportation unit 7 is equipped with a gripper 36, a rotary table 37, and a transfer part 38, but the invention is not limited only thereto. For instance, the rotating transportation unit may be constructed as such that the relay 6 may be moved while rotating it around the rotation axis set perpendicular to the fixing plane 5.

The relay 6 provided in each of the embodiments above is disk-shaped, but this is not essential and the invention is not limited only thereto.

Furthermore, in each of the above embodiments, the relay liquid tank 11 and the cleaner liquid tank 12 are each implemented with a liquid inlet 11 a and outlet 11 b and/or the liquid inlet 12a and outlet 11 b, 12b. However, they are not limited thereto, and the liquid inlet 11 a, 12a, and a liquid outlet 11 b, 12b may be excluded. The filter 12d is not essential.

Furthermore, the liquid inlet 11a, 12a, and a liquid outlet 11b, 12b are not limited to the above embodiments, and any type is acceptable so long as it is capable of flowing the water W in the surface layer of each of the liquid tanks 11 and 12 along a predetermined direction (that is, in the case of the relay liquid tank 11, the direction in parallel with the conveying direction D1 and faced with the advancing direction D1a in planar view; in the case of the cleaner liquid tank 12, the direction of water flow.)

It is also possible to properly substitute the constitutional parts of the embodiments with a known one so long as it does not deviate from the scope of the present invention, and to appropriately use the modified examples in combination thereof.

## Claims

1. A thin-section slide-sample manufacturing apparatus (1, 70, 80) for manufacturing a thin-section slide sample (N) by cutting out a thin section (M) from an embedded block (B) containing embedded therein a biological sample (S), transporting the thin section (M) on a conveyor unit (3), and transferring the thin section on a substrate (G) disposed at a distance from the conveyor unit, said thin-section slide-sample manufacturing apparatus comprising:
a relay (6) having a fixing plane (5) onto which the thin section (M)is detachably fixed;
a rotating transportation unit (7) adapted to move the relay between the conveyor unit and the substrate while rotating the relay around a rotation axis (37a) provided orthogonal to the fixing plane;
a control unit (9, 71, 81) adapted to move the relay to the conveyor unit by using the rotating transportation unit, and, after fixing the thin section transported by the conveyor unit to the fixing plane, to move the relay to the substrate where the thin section is detached and transferred to the substrate; and wherein,
before the thin section is transferred to the substrate, the control unit is arranged to rotate the relay according to a relative position of the thin section around the rotation axis by using the rotating transportation unit.

2. A thin-section slide-sample manufacturing apparatus as claimed in Claim 1, wherein,
the thin-section slide-sample manufacturing apparatus comprises an imaging unit (10) adapted to take an image of the fixing plane onto which the thin section is fixed, and
the control unit is adapted to rotate the relay with the rotating transportation unit according to reference data on a predetermined position on the fixing plane and the relative position of the thin section around the rotation axis based on the image taken with the imaging unit.

3. A thin-section slide-sample manufacturing apparatus as claimed in Claim 2, wherein,
by using the rotating transportation unit, the control unit is adapted to move the relay with respect to the substrate on transferring the thin section to the substrate according to the reference data and the image data.

4. A thin-section slide-sample manufacturing apparatus as claimed in Claim 2 or Claim 3, wherein,
the thin-section slide-sample manufacturing apparatus comprises a disposal part (12) into which a said thin section fixed on the fixing plane can be detached and disposed of,
the rotating transportation unit is adapted to move the relay with respect to the disposal part, and
the control unit is adapted to screen the defective thin sections according to the image data, such that a said thin section judged defective is disposed to the disposal part by moving the relay to the disposal part using the rotating transportation unit.

5. A thin-section slide-sample manufacturing apparatus as claimed in one of Claims 1 to 4, wherein,
the thin-section slide-sample manufacturing apparatus comprises a relay liquid tank (11) which retains a liquid (W),
the conveyor unit comprising a conveyor (24) having one end immersed in the relay liquid tank adapted to transport the thin section mounted on the top thereof, and
the control unit is adapted to move the relay by using the rotating transportation unit when the thin section is transferred to the fixing plane and fixed by the conveyor unit, such that a part of the thin section is brought into contact with the fixing plane, in such a manner that a part of the thin section is detached from the conveyor and set afloat on the surface of the liquid, while a part of the rest of the thin section is retained on the surface of the conveyor.

6. A thin-section slide-sample manufacturing apparatus as claimed in Claim 5, wherein,
the thin-section slide-sample manufacturing apparatus is equipped with a detection unit (26) adapted to detect the thin section set afloat on the surface of the liquid, and
the control unit is adapted to move the relay to fix the thin section on the fixing plane by using the rotating transportation unit according to the detection data obtained by the detection unit.

7. A thin-section slide-sample manufacturing apparatus as claimed in Claim 5 or Claim 6, wherein,
on detaching from the conveyor unit, the substrate (G) is moved to the substrate position (Ga) at which a part thereof is immersed in the relay liquid tank (11), and
the control unit is adapted to move the relay by using the rotating transportation unit when the fixed thin section is detached from the fixing plane and transferred to the substrate, such that a part of the thin section is brought into contact with the substrate that is moved to the substrate position, in such a manner that a part of the thin section is detached from the relay and set afloat on the surface of the liquid, while a part of the rest of the thin section is retained on the fixing plane.

8. A thin-section slide-sample manufacturing apparatus as claimed in Claim 7, wherein,
the thin-section slide-sample manufacturing apparatus is equipped with a substrate conveyor unit (4) which is adapted to clamp and arrange the substrate to set the substrate in the substrate position, which is also capable of moving the substrate up and down with respect to the liquid plane of the relay liquid tank, and
before the fixed thin section is detached and transferred from the fixing plane to the substrate, the control unit is adapted to operate the substrate conveyor unit to immerse the substrate in the liquid retained in the relay liquid tank deeper than the substrate position and then to pull up the substrate to set the substrate at the substrate position.

9. A thin-section slide-sample manufacturing apparatus as claimed in one of Claims 5 to 8, wherein,
the fixing plane (5) has a mesh pattern formed in such a manner that it penetrates the relay and in a direction crossing the fixing plane.

10. A thin-section slide-sample manufacturing apparatus as claimed in one of Claims 5 to 9, wherein,
the thin-section slide-sample manufacturing apparatus is equipped with a cleaner liquid tank (12) which retains a liquid, and
the rotating transportation unit is formed movable with respect to the cleaner liquid tank.

11. A thin-section slide-sample manufacturing apparatus as claimed in one of Claims 1 to 10, wherein,
the rotating transportation unit comprises a gripper (36) which is capable of clamping and releasing the relay, a rotary table on which a relay is mountable adapted to rotate the mounted relay around the rotation axis, a transfer part (38) which is adapted to move the gripper in such a manner that the relay can be transferred among the conveyor unit, the substrate, and the rotary table, and
the control unit is adapted to move the relay clamped by the gripper to the rotary table by using the transfer, and after releasing the relay from the gripper to mount the relay on the rotary table, to rotate the relay by using the rotary table.

12. A thin-section slide-sample manufacturing apparatus as claimed in Claim 11, wherein,
the relay is formed in a disk-like shape, and
the gripper holds the relay by clamping the outer peripheral part thereof.

13. A thin-section slide-sample manufacturing apparatus as claimed in Claim 12, wherein,
a concave groove (35) is formed over the entire circumference of peripheral part of the relay, and
the gripper comprises a first member (39) and a second member (40) that are disposed faced with each other, such that the relay is clamped by bringing them closer to each other and that the relay is released by taking them apart from each other, provided that
the first member comprises a contact plane (44) formed on the outer peripheral plane of the first member which is brought into contact with the outer peripheral plane of the relay in the case the relay is clamped with the second member, and the second member comprises a engaging convex part (49) that matches with the concave groove, which is formed on the second member at a distance with each other to clamp the relay.

14. A method for manufacturing thin-section slide-samples by using a thin-section slide-sample manufacturing apparatus (1, 70, 80) comprising:
a conveyor unit (3) for transporting thin sections (M) having been cut out from an embedded block (B) containing embedded therein a biological sample (S),
a relay (6) having a fixing plane (5) onto which a thin section (M) is detachably fixed, and
a rotating transportation unit (7) which is adapted to move the relay between the conveyor unit and a substrate set at a distance while rotating the relay around a rotation axis (37a) provided orthogonal to the fixing plane,
said method for manufacturing thin-section slide-samples being a method of manufacturing thin-section slide samples by transferring the thin sections transported by the conveyor unit to the substrate, and comprising:
a receiving step which comprises moving the relay to the conveyor unit by using the rotating transportation unit to thereby receive the thin section transported by the conveyor unit and fixing it on the fixing plane, and
a delivery step subsequent to the receiving step, which comprises moving the relay to the substrate by using the rotating transportation unit to thereby detach the fixed thin section from the fixing plane and delivering it to the substrate,
provided that a rotation step is set between the receiving step and the delivery step, which comprises rotating the relay by using the rotating transportation unit according to a relative position of the thin section around the rotation axis.

15. A method for manufacturing thin-section slide-samples as claimed in Claim 14, wherein the method for manufacturing thin-section slide-samples comprises:
an imaging step which comprises imaging the fixing plane on which the thin section is fixed,
and
the rotation step comprises rotating the relay using the rotating transportation unit according to reference data on a predetermined position of the fixing plane and the relative position of the thin section around the rotation axis based on the image taken with the imaging unit.

16. A method for manufacturing thin-section slide-samples as claimed in Claim 14, wherein,
the delivery step comprises moving the relay with respect to the substrate using the rotating transportation unit according to the reference data and the image data.

17. A method for manufacturing thin-section slide-samples as claimed in Claim 14 or Claim 15, wherein, the method for manufacturing thin-section slide-samples comprises:
a disposal step which comprises detaching the thin section fixed to the fixing plane and disposing it from the fixing plane, and
a screening step which comprises judging whether the thin section is defective or not according to the imaging data,
provided that the screening step comprises carrying out the disposal step in case the thin section is judged defective.

18. A method for manufacturing thin-section slide-samples as claimed in one of Claims 14 to 17, wherein,
the thin-section slide-sample manufacturing apparatus comprises a relay liquid tank (11) which retains a liquid,
the conveyor unit has a conveyor with one end immersed in the relay liquid tank, and is adapted to transport the thin section mounted on an upper plane, and
the receiving step comprises moving the relay by using the rotating transportation unit in such a manner that a part of the thin section is brought into contact with the fixing plane in the case a part of the thin section is detached from the conveyor and set afloat on the surface of the liquid, while a part of the rest of the thin section is remained on the surface of the conveyor.

19. A method for manufacturing thin-section slide-samples as claimed in Claim 18, wherein, the method for manufacturing thin-section slide-samples comprises:
a detection step which comprises detecting the thin section set afloat the liquid plane; provided that
the receiving step comprises moving the relay to fix the thin section on the fixing plane by using the rotating transportation unit, according to the detection data obtained in the detection step.

20. A method for manufacturing thin-section slide-samples as claimed in Claim 18 or Claim 19, wherein,
the thin-section slide-sample manufacturing apparatus is constructed such that the substrate set apart from the conveyor unit is placed at the substrate position with a part thereof immersed in the relay liquid tank, and
the delivery step comprises moving the relay by using the rotating transportation unit in such a manner that a part of the thin section is brought into contact with the substrate set at the substrate position in the case a part of the thin section is detached from the relay and set afloat on the surface of the liquid, while a part of the rest of the thin section remains on the fixing plane.

21. A method for manufacturing thin-section slide-samples as claimed in Claim 20, wherein,
the thin-section slide-sample manufacturing apparatus is constructed as such that it comprises a substrate conveyor unit (4) which is adapted to clamp and arrange the substrate to set the substrate in the substrate position, which is also capable of moving the substrate up and down with respect to the liquid plane of the relay liquid tank, and
the delivery step comprises, by using the substrate conveyor unit, immersing the substrate in the liquid retained in the relay liquid tank deeper than the substrate position and then pulling up the substrate to set the substrate at the substrate position.
